# EUROPEAN PATENT SPECIFICATION

(11) **EP 1 537 618 B1**
(45) Date of publication and mention of the grant of the patent: **05.08.2009**
(21) Application number: 03795233.0
(22) Date of filing: 22.08.2003
(51) Int. Cl.: H01M 8/04, H01M 8/02

(54) **POLYMER ELECTROLYTE FUEL CELL AND POWER GENERATION DEVICE**
POLYMERELEKTROLYT-BRENNSTOFFZELLE UND ENERGIEERZEUGUNGSVORRICHTUNG
PILE A COMBUSTIBLE A ELECTROLYTE POLYMERE ET DISPOSITIF DE PRODUCTION DE COURANT

(30) Priority: 11.09.2002 JP 2002265253
(43) Date of publication of application: 08.06.2005
(73) Proprietor: NISSAN MOTOR COMPANY LIMITED, Yokohama-shi Kanagawa 221-0023 (JP)
(72) Inventor: IKEZOE, Keigo, Kanagawa 243-0192 (JP)
(74) Representative: Weber, Joachim
(86) International application number: PCT/JP2003/010622
(87) International publication number: WO 2004/025764

(56) References cited:
- EP-A- 0 067 423
- EP-A- 1 030 396
- WO-A-97/33331
- DE-A- 4 201 632
- US-A- 5 759 712
- US-A1- 2002 058 168
- US-B1- 6 284 399

## Description

### FIELD OF THE INVENTION

This invention relates to moisture distribution within a polymer electrolyte fuel cell (PEFC).

### BACKGROUND OF THE INVENTION

Tokkai Hei 8-138691, published by Japan Patent Office in 1996, discloses a moisture transporting structure of a polymer electrolyte fuel cell (PEFC). The polymer electrolyte fuel cell (PEFC) is provided with a membrane electrode assembly (MEA) in which a polymer electrolyte film is sandwiched by gas diffusion electrodes (GDEs) that constitute an anode and a cathode. The membrane electrode assembly (MEA) is gripped by a pair of plates. Gas channels facing the cathode and the anode, respectively, are formed in the plates.

Also Figure 15 in patent publication US5759712 discloses a moisture transporting structure within a PEFC.

The membrane electrode assembly (MEA) generates a large amount of water vapor as a result of a reaction between hydrogen ions and oxygen in the gas diffusion electrodes (GDEs). On the other hand, in order for the membrane electrode assembly (MEA) to separate hydrogen into protons and hydrogen ions needed in power generation, it is necessary for the membrane electrode assembly (MEA) to maintain a moist state at all times. In the prior art, the plates are constituted by using a porous substance, thus causing generated moisture to be absorbed therein. The moisture is transported by capillary action and supplied to dry portions of the membrane electrode assembly (MEA) where humidification is necessary.

### SUMMARY OF THE INVENTION

Polymer electrolyte fuel cells (PEFCs) according to the prior art perform the transportation of moisture from a moist portion of the membrane electrode assembly (MEA) to the dry portion only by capillary action within the plates. Therefore, a sufficient amount of moisture cannot be transferred from the moist portion to the dry portion if the moisture transporting distance between the two portions is long, and there is a possibility that the moist state of the membrane electrode assembly (MEA) cannot be made uniform.

For this reason, it is difficult to completely prevent phenomena that are undesirable in terms of power generation function, such as "dryout" in which a portion of the membrane electrode assembly (MEA) becomes dry or "flooding" in which localized moisture blocks supply of the cathode gas to the membrane electrode assembly (MEA).

It is therefore an object of this invention to improve the transporting performance of moisture from a moist portion of a membrane electrode assembly (MEA) of a polymer electrolyte fuel cell (PEFC) to a dry portion.

It is a further object of this invention to suitably control moisture within a fuel cell stack that uses a polymer electrolyte fuel cell (PEFC).

In order to achieve the above objects, this invention provides a polymer electrolyte fuel cell comprising a membrane electrode assembly comprising a polymer film and a pair of electrodes formed on both surfaces of the polymer film, a downstream gas supply channel facing a specific electrode of the pair of the electrodes, an upstream gas supply channel which supplies a reaction gas to the downstream gas supply channel and is not facing the specific electrode, and a partition wall which is made from a porous material, is arranged substantially parallel to the polymer film, and partitions the downstream gas supply channel and the upstream gas supply channel.

This invention also provides a power generation device comprising a fuel cell stack in which a plurality of polymer electrolyte fuel cells are laminated.

Each of the fuel cells comprises a membrane electrode assembly comprising a polymer film and a pair of electrodes formed on both surfaces of the polymer film, a downstream gas supply channel facing a specific electrode of the pair of the electrodes, an upstream gas supply channel which supplies a reaction gas to the downstream gas supply channel, and is not facing the specific electrode, and a partition wall which is made from a porous material, is arranged substantially parallel to the polymer film, and partitions the downstream gas supply channel and the upstream gas supply channel.

The fuel cell stack comprises a first inlet manifold which distributes the reaction gas to the upstream gas supply channel of each of the fuel cells, a first outlet manifold which collects the reaction gas from the downstream gas supply channel of each of the fuel cells, a second outlet manifold which collects the reaction gas of the upstream gas supply channel of each of the fuel cells, and a second inlet manifold which distributes the reaction gas to the downstream gas supply channel of each of the fuel cells.

The power generation device further comprises a blower which forcibly supplies the reaction gas collected by the second outlet manifold to the second inlet manifold.

The details as well as other features and advantages of this invention are set forth in the remainder of the specification and are shown in the accompanying drawings.

### BRIEF DESCRIPTION OF THE DRAWINGS

FIG. 1 is a schematic diagram of a power generation device according to this invention.
FIGs. 2A and 2B are longitudinal sectional views of a fuel cell according to this invention.
FIG. 3 is a longitudinal sectional view of essential parts of a fuel cell stack according to this invention.
FIG. 4 is a front view of a porous bipolar plate according to this invention.
FIG. 5 is a front view of a first solid bipolar plate according to this invention.
FIG. 6 is a front view of a second solid bipolar plate according to this invention.
FIG. 7 is a front view of an impermeable layer according to this invention.
FIG. 8 is a diagram for explaining a relationship between temperature and saturation vapor pressure.
FIG. 9 is a diagram showing gas temperature and relative humidity in various positions within a cathode gas channel, according to the prior art.
FIG. 10 is similar to FIG. 1, but shows a second embodiment of this invention.
FIG. 11 is a longitudinal sectional view of a fuel cell according to a second embodiment of this invention.
FIG. 12 is a front view of a porous bipolar plate according to the second embodiment of this invention.
FIG. 13 is a front view of an impermeable layer according to the second embodiment of this invention.
FIG. 14 is a diagram showing gas temperature, relative humidity, and moisture amount in various positions within a cathode gas channel, according to the second embodiment of this invention;
FIG. 15 is a front view of a porous bipolar plate according to a third embodiment of this invention.
FIG. 16 is similar to FIG. 1, but shows a fourth embodiment of this invention.
FIG. 17 is a diagram for explaining a relationship between gas flow rate and pressure difference between an upstream cathode gas channel and a downstream cathode gas channel according to the fourth embodiment of this invention;
FIG. 18 is a diagram for explaining a relationship between power generation load of a fuel cell stack and opening of a pressure regulating valve according to the fourth embodiment of this invention.
FIG. 19 is a longitudinal sectional view of essential parts of a fuel cell stack for explaining a laminate structure of a fuel cell according to a fifth embodiment of this invention.
FIG. 20 is similar to FIG. 1, but shows a sixth embodiment of this invention.
FIG. 21 is a longitudinal sectional view of essential parts of a fuel cell stack for explaining a laminate structure of a fuel cell according to a seventh embodiment of this invention.
FIG. 22 is a front view of a first solid bipolar plate according to the seventh embodiment of this invention.
FIG. 23 is a longitudinal sectional view of essential parts of a fuel cell stack for explaining a variation relating to the laminate structure of a fuel cell, according to the seventh embodiment of this invention.
FIG. 24 is similar to FIG. 1, but shows an eighth embodiment of this invention.
FIG. 25 is a schematic diagram of a cathode gas supply control device according to the eighth embodiment of this invention.
FIG. 26 is a flowchart for explaining a cathode gas supply routine executed by a controller according to the eighth embodiment of this invention.
FIG. 27 is a schematic diagram of a power generation device for explaining a variation relating to cathode gas supply, according to the eighth embodiment of this invention.

### DESCRIPTION OF THE PREFERRED EMBODIMENTS

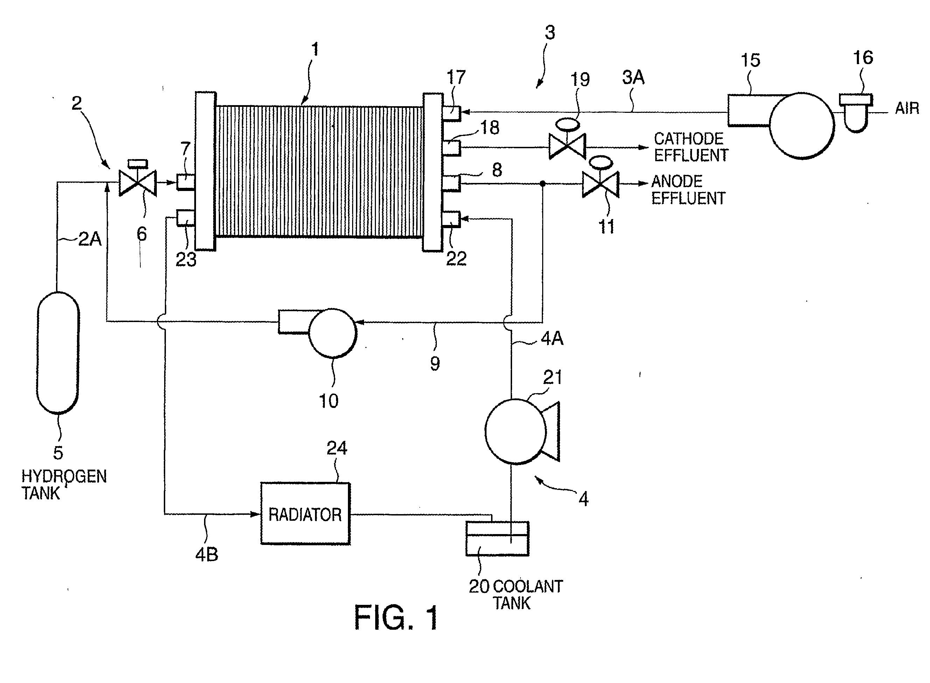

Referring to FIG. 1 of the drawings, a power generation device is provided with a fuel cell stack 1, an anode gas supply unit 2 for supplying hydrogen to the fuel cell stack 1 as an anode gas, a cathode gas supply unit 3 for supplying air to the fuel cell stack 1 as a cathode gas, and a cooling unit 4 for cooling the fuel cell stack 1. The fuel cell stack 1 is constituted by a large number of laminated polymer electrolyte fuel cells (PEFCs).

The anode gas supply unit 2 supplies the anode gas from an anode gas source 5 through an anode supply passage 2A to an inlet manifold 7 of the fuel cell stack 1. A pressure regulating valve 6 for regulating the anode gas pressure is provided in the anode supply passage 2A. The anode gas is discharged from an outlet manifold 8 as an anode effluent after circulating within the fuel cell stack 1. A recirculation passage 9 and a purge valve 11 are connected to the outlet manifold 8. The recirculation passage 9 is connected to the anode gas supply passage 2A upstream of the pressure regulating valve 6. A recirculation pump 10 is provided in the recirculation passage 9.

The purge valve 11 is closed during normal operation, and the anode effluent that has been discharged from the outlet manifold 8 is recirculated to the anode supply passage 2A via the recirculation passage 9 by the recirculation pump 10. The purge valve 11 is opened during purging, and the anode effluent within the fuel cell stack 1 is released to the ambient atmosphere.

A cathode gas supply unit 3 supplies air aspirated through a filter 16 by a blower 15 to an inlet manifold 17 of the fuel cell stack 1 through a cathode gas supply passage 3A. The air that has circulated within the fuel cell stack 1 is discharged to the ambient atmosphere as a cathode effluent from an outlet manifold 18 through a pressure regulating valve 19.

The cooling unit 4 circulates a coolant within a coolant tank 20 to the fuel cell stack 1 in order to maintain the fuel cell stack 1 at an optimal temperature. The coolant within the coolant tank 20 is supplied to an inlet manifold 22 of the fuel cell stack 1 through a coolant supply passage 4A by a pump 21. The coolant that has circulated within the fuel cell stack 1 is discharged from an outlet manifold 23 to a coolant collection passage 4B, and is collected in the coolant tank 20 after heat is released in a radiator 24.

All of the inlet manifolds 7, 17, and 22, and all of the outlet manifolds 8, 18, and 23 branch inside the fuel cell stack 1, and communicate with channels formed in each of the fuel cells that form the fuel cell stack 1.

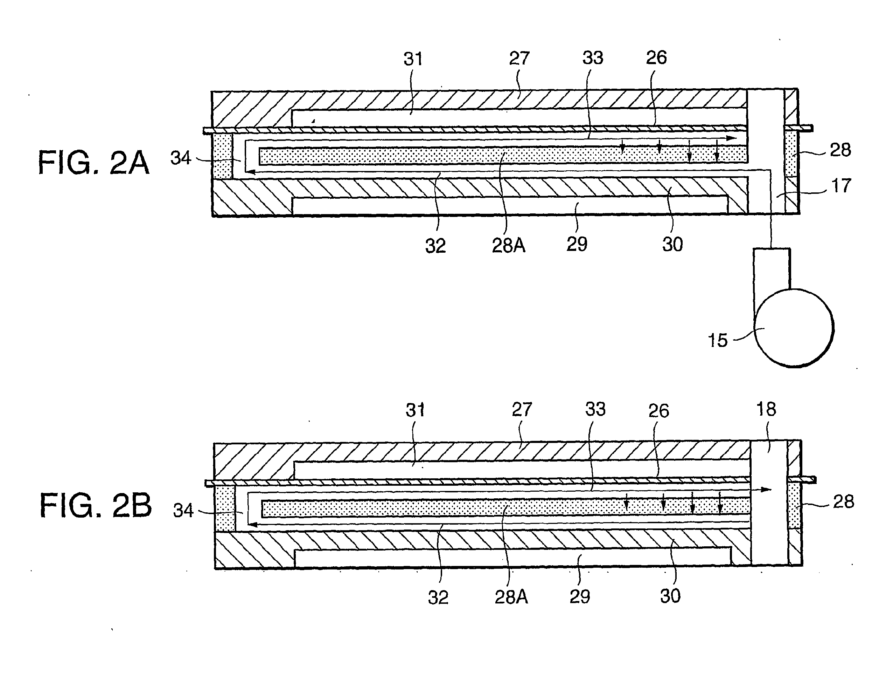

Referring now to FIGs. 2A and 2B, the structures of the channels within each of the fuel cells will be described. The fuel cells are made from a membrane electrode assembly (MEA) 26, a first solid bipolar plate (solid BPP) 27, a porous bipolar plate (porous BPP) 28, and a second solid BPP 30.

The porous BPP 28 corresponds to a first plate in the claims. The first solid BPP 27 corresponds to the second plate in the claims, and the second solid BPP 30 corresponds to the third plate in the claims.

The MEA 26 is a composite body of a solid polymer electrolyte film 26A, and an anode gas diffusion electrode 26B and a cathode gas diffusion electrode 26C that are disposed on both sides of the solid polymer electrolyte film 26A.

The MEA 26 is sandwiched by the first solid BPP 27 and the porous BPP 28. The second solid BPP 30 is disposed in contact with the porous BPP 28.

An anode gas channel 31 that faces the anode gas diffusion electrode 26B is formed in the first solid BPP 27. The first solid BPP 27 is constituted by a gas-impermeable material.

An upstream cathode gas channel 32 that faces the second solid BPP 30, and a downstream cathode gas channel 33 that faces the cathode gas diffusion electrode 26C are formed in the porous BPP 28. The upstream cathode gas channel 32 communicates with the inlet manifold 17, and the downstream cathode gas channel 33 communicates with the outlet manifold 18. FIG. 2A shows a transverse section in which the fuel cell is cut along a center line of the entrance manifold 17, and FIG. 2B shows a transverse section in which the fuel cell is cut along a center line of the outlet manifold 18. The inlet manifold 17 and the outlet manifold 18 are formed to pass through the fuel cell stack 1 in a longitudinal direction, in other words, in a direction in which the fuel cells are laminated, as shown in FIGS. 2A and 2B.

The upstream cathode gas channel 32 and the downstream cathode gas channel 33 are separated by a partition wall 28A that forms a portion of the porous BPP 28. A through hole 34 that communicates with the upstream cathode gas channel 32 and the downstream cathode gas channel 33 is formed through the partition wall 28A in the porous BPP 28 at a location that is furthest away from the inlet manifold 17 and the outlet manifold 18.

The porous BPP 28 is constituted by a porous material that has innumerable microscopic pores through which gasses and liquids can pass. It should be noted that the microscopic pores are blocked due to liquid surface tension if a liquid such as water exists inside the material, and therefore gases are prevented from passing through.

A coolant channel 29 is formed in the second solid BPP 30. The second solid BPP 30 is constituted by a gas-impermeable material.

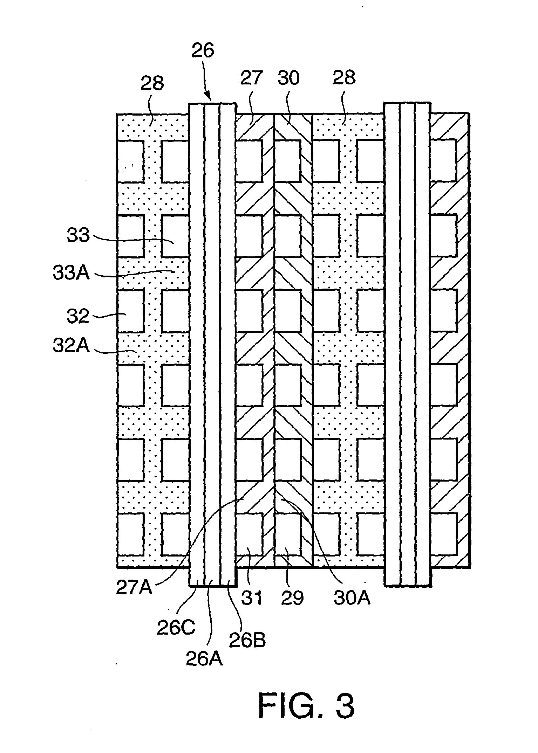

FIG. 3 shows a transverse section of the fuel cell stack 1 cut in a direction orthogonal to FIGs. 2A and 2B. As shown in FIG. 3, many single fuel cells are laminated in the fuel cell stack 1, and the coolant channel 29 is tightly sealed by a back surface of the first solid BPP 27 of the adjacent fuel cell. Also, as shown in the figure, the anode gas channel 31 is partitioned by a plurality of parallel ribs 27A that form a portion of the first solid BPP 27. The upstream cathode gas channel 32 and the downstream cathode gas channel 33 are partitioned by a plurality of parallel ribs 32A, and a plurality of parallel ribs 33A, respectively, that form a portion of the porous BPP 28. The coolant channel 29 is partitioned by a plurality of parallel ribs 30A that form a portion of the second solid BPP 30.

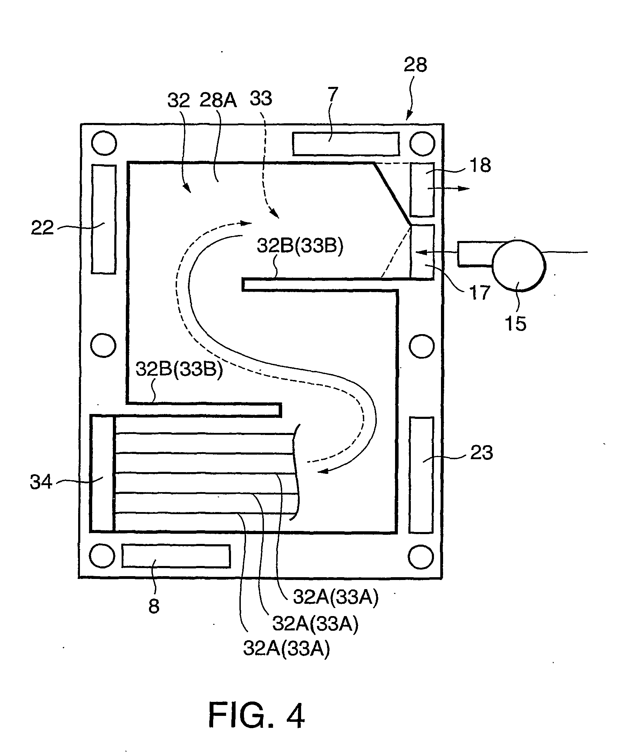

FIG. 4 is a front view of the porous BPP 28, and corresponds to a diagram of the porous BPP 28 of FIG. 2A as viewed from below. The inlet manifold 7 and the outlet manifold 8 of the anode gas, and the inlet manifold 22 and the outlet manifold 23 of the coolant pass completely through the fuel cell stack 1 as shown in this figure, similarly to the inlet manifold 17 and the outlet manifold 18 of the cathode gas.

One end of the upstream cathode gas channel 32 in the porous BPP is connected to the inlet manifold 17, and the other end of the upstream cathode gas channel 32 is connected to the through hole 34. One end of the downstream cathode gas channel 33 is connected to the outlet manifold 18, and the other end of the downstream cathode gas channel 33 is connected to the through hole 34.

The cathode gas supplied from a blower 15 flows into the upstream cathode gas channel 32 from the inlet manifold 17 as shown in FIG. 2A passes through the through hole 34, and arrives at the downstream cathode gas channel 33. At the downstream cathode gas channel 33, after oxygen is supplied to the gas diffusion layer of the MEA 26, the cathode gas is discharged to the outlet manifold 18 as a cathode effluent.

Referring again to FIG. 4, the cathode gas that flows in from the inlet manifold 17 flows down the upstream cathode gas channel 32 and reaches the through hole 34.

Jetties 32B are formed at two locations in the upstream cathode gas channel 32 as shown in FIG. 4, and the ribs 32A are disposed to detour around the jetties 32B. The cathode gas accordingly detours around the jetties 32B, meanders in a substantially S-shape as shown by a solid line arrow, before it reaches the through hole 34.

After passing through the through hole 34, the cathode gas flows into the downstream cathode gas channel 33 expanding on the reverse side of the partition wall 28A. Jetties 33B that are similar to the jetties 32B are formed in the downstream cathode gas channel 33 on the reverse side of the jetties 32B. The cathode gas flown out from the through hole 34 detours around the jetties 33B formed at two locations, and meanders in a substantially S-shape as shown by a dashed line arrow in FIG. 4, before it reaches the outlet manifold 18. The dashed line in the vicinity of the outlet manifold 18 shows the outline of the downstream cathode gas channel 33. The inlet manifold 17 and the outlet manifold 18 are disposed adjacently to each other, and respectively penetrates the porous BPP 20 on its outer circumference.

The inlet manifold 7 and the outlet manifold 8 of the anode gas, and the inlet manifold 22 and the outlet manifold 23 of the coolant also respectively penetrates the porous BPP 28 on its outer circumference but in locations that do not interfere with the inlet manifold 17 and the outlet manifold 18, as shown in FIG. 4.

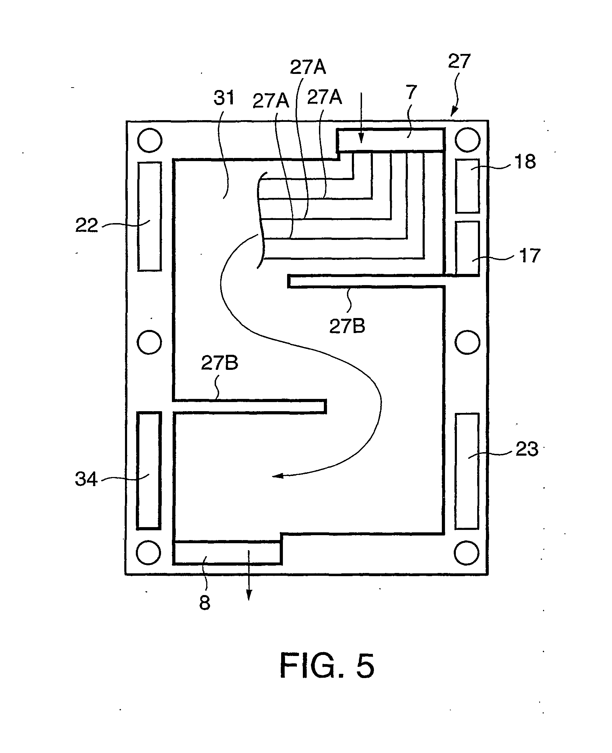

Referring to FIG. 5, one end of the anode gas channel 31 in the first solid BPP 27 is connected to the inlet manifold 7, and the other end of the anode gas channel 31 is connected to the outlet manifold 8. Two jetties 27B are formed in the anode gas channel 31, and the ribs 27A are disposed to detour around the jetties 27B. The anode gas that flows into the anode gas channel 31 from the inlet manifold 7 therefore detours around the jetties 32B, and meanders in a substantially S-shape as shown by a solid line arrow, before it reaches the outlet manifold 8.

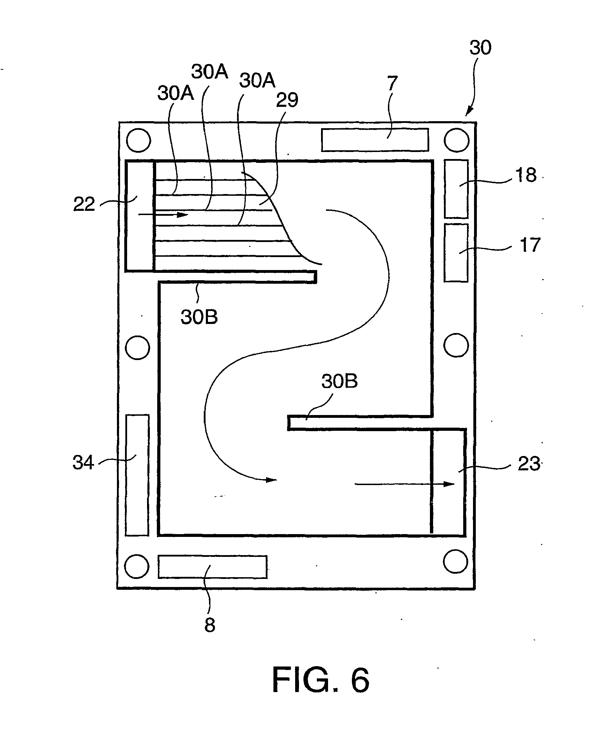

Referring to FIG. 6, one end of the coolant channel 29 in the second solid BPP 30 is connected to the inlet manifold 22, and the other end of the coolant channel 29 is connected to the outlet manifold 23. Jetties 30B are formed in the coolant channel 29 at two locations, and ribs 30A are disposed to detour around the jetties 32B. The anode gas that flows into the anode gas channel 31 from the inlet manifold 22 therefore detours around the jetties 32B and meanders in a substantially S-shape as shown by a solid line arrow, before it reaches the outlet manifold 23.

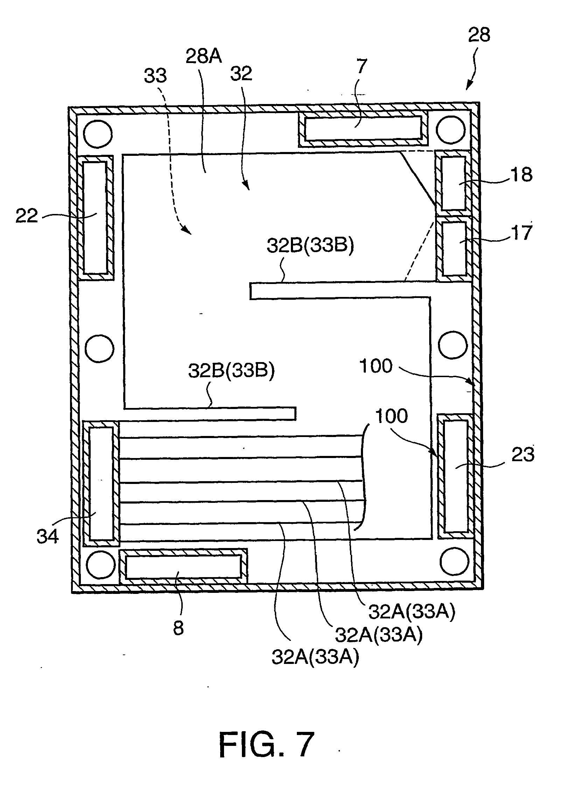

Referring to FIG. 7, the porous BPP 28 is constituted by a porous material through which gasses and liquids can pass. An impermeable layer 100 is therefore formed by impregnating a resin into the porous BPP 28 in the outer circumference of the porous BPP 28, and the inner circumference of the manifolds 7, 8, 17, 18, 22, 23 and the through hole 34 as shown by the hatchings in the figure so that gasses and moisture do not leak out from the porous BPP 28.

Referring again to FIG. 2B, moisture vapor is generated by a reaction between oxygen within the cathode gas and hydrogen that has passed through the electrolytic film in the gas diffusion electrode of the MEA 26 facing the downstream cathode gas channel 33. Further, the cathode gas of the downstream cathode gas channel 33 becomes high temperature due to the heat of reaction between hydrogen and oxygen in the gas diffusion electrode of the MEA 26.

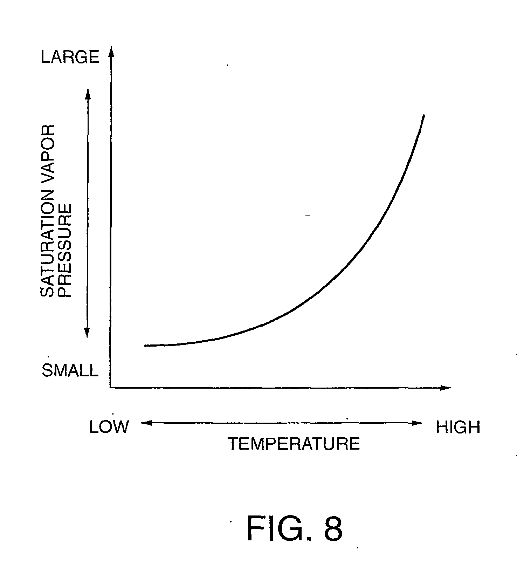

Referring to FIG. 8, if the temperature of the cathode gas becomes high, the saturation vapor pressure increases rapidly. The cathode gas that flows down the downstream cathode gas channel 33 therefore contains a large amount of moisture vapor.

On the other hand, referring to FIG. 2A, the air supplied from the inlet manifold 17 of the cathode gas to the upstream cathode gas channel 32 is ambient air supplied from the blower 15, and is relatively low temperature with respect to the fuel cell during operation. The upstream cathode gas channel 32 near the inlet manifold 17 therefore becomes low temperature. The high temperature cathode gas of the downstream cathode gas channel 33, which is disposed on the rear side of the upstream cathode gas channel 32 and is near the outlet manifold 18 is cooled through the partition wall 28A of the porous BPP 28.

As a result, the saturation vapor pressure of the cathode gas of the downstream cathode gas channel 33 drops, and saturated water vapor permeates as a liquid into the innumerable microscopic pores of the partition wall 28A of the porous BPP 28 due to capillary action. As shown by a plurality of small arrows in FIGs. 2A and 2B, the water that permeates into the partition wall 28A moves within the partition wall 28A toward the dried upstream cathode gas channel 32. As stated above, the cathode gas of the downstream cathode gas channel 33 is high temperature, and therefore the temperature of the water that condenses from the cathode gas of the downstream cathode gas channel 33 is also high. Moisture that passes through the partition wall 28A and reaches the upstream gas channel 32 therefore heats and humidifies the cathode gas within the upstream cathode gas channel 32.

Therefore, the cathode gas of the upstream cathode gas channel 32 has been pre-heated and pre-humidified when it is supplied from the through hole 34 to the downstream cathode gas channel 33.

That is, the cathode gas of a downstream portion of the downstream cathode gas channel 33 that has the highest temperature and highest humidity and the cathode gas of an upstream portion of the upstream cathode gas channel 32 that has the lowest temperature and lowest humidity perform moisture and temperature exchange over a short moving distance through the partition wall 28A constituted by a porous material. Therefore, it is possible to efficiently exchange the moisture and temperature in a large amount.

As a result, the cathode gas in the upstream portion of the downstream cathode gas channel 33 contains a large amount of moisture at a high temperature. This makes the humidity distribution and the moisture distribution uniform over the entire length of the downstream cathode gas channel 33 that faces the MEA 26.

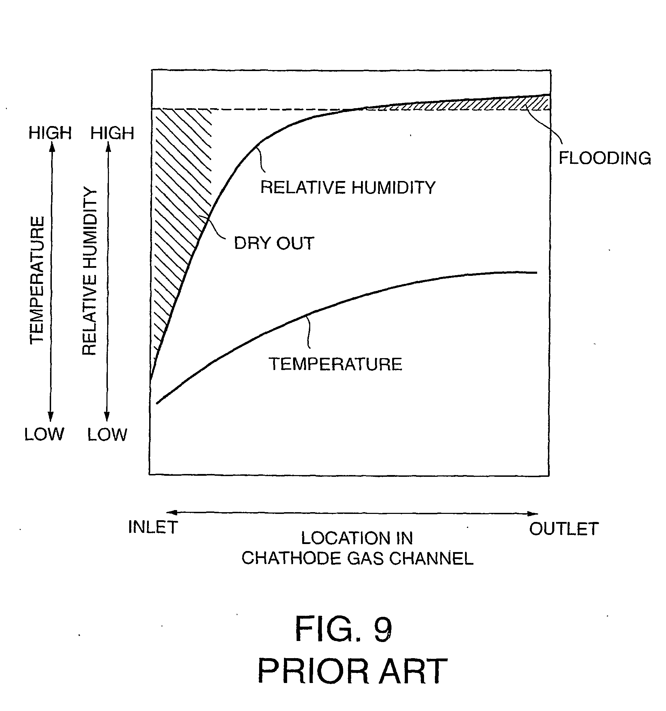

FIG. 9 shows changes in the temperature and the relative humidity within the cathode gas channel according to the prior art. As shown in the figure, the temperature and the relative humidity of the cathode gas channel both increase as the distance from the inlet manifold increases, or the distance to the outlet manifold decreases. As a result, the cathode gas is discharged from the outlet manifold while containing a large amount of water vapor. Further, if the moisture that exceeds the saturation vapor pressure condenses, then flooding tends to occur in the vicinity of the outlet manifold. On the other hand, the temperature and the relative humidity of the cathode gas channel are both low in the vicinity of the inlet manifold, and therefore dryout tends to occur.

As discussed above, in this power generation device, the temperature distribution and the moisture distribution are made uniform over the entire length of the downstream cathode gas channel 33, which faces the MEA 26. An environment can therefore be obtained in which neither dryout nor flooding occurs.

Although the porous BPP 28 is provided only for the cathode side in this embodiment, it is also possible to form the BPP for the anode side with a porous material, thereby obtaining uniform moisture distribution in the anode gas.

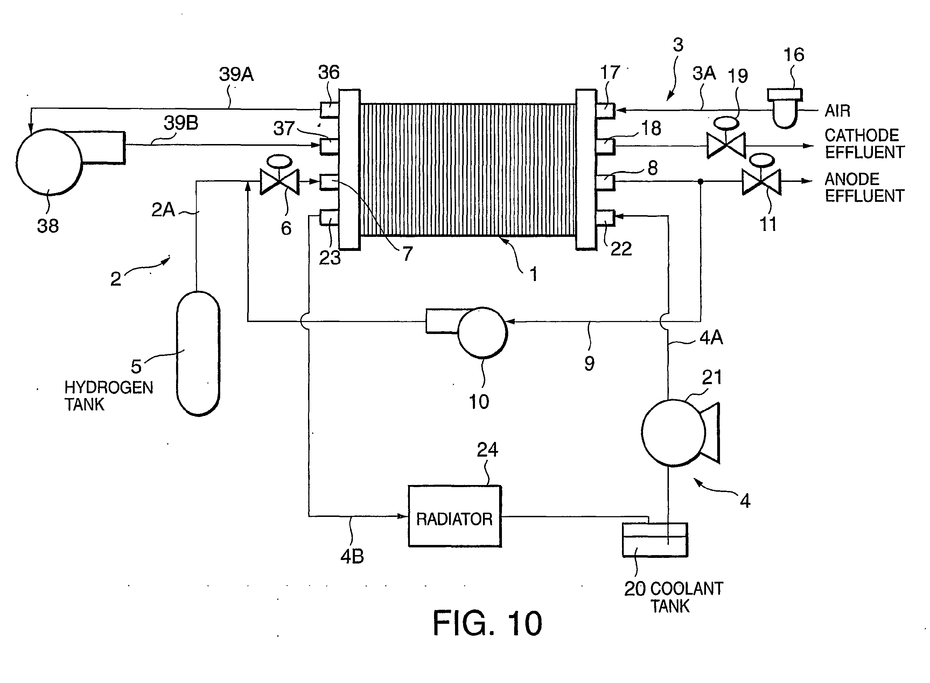

Referring to FIGs. 10 to 14, a second embodiment of this invention will be described.

The power generation device shown in FIG. 10 differs from that of the first embodiment in the structure of the cathode gas supply unit 3. The upstream cathode gas channel 32 of each fuel cell is connected to an external pipe 39A that leads to a blower 38 outside of the fuel cell stack 1 through a second outlet manifold 36. The blower 38 takes in the cathode gas of the external pipe 39A and forcibly sends out the cathode gas to an external pipe 39B. The cathode gas that is sent out to the external pipe 39B is redistributed to the downstream cathode gas channel 33 of each of the fuel cells through a second inlet manifold 37 that is formed in the fuel cell stack 1.

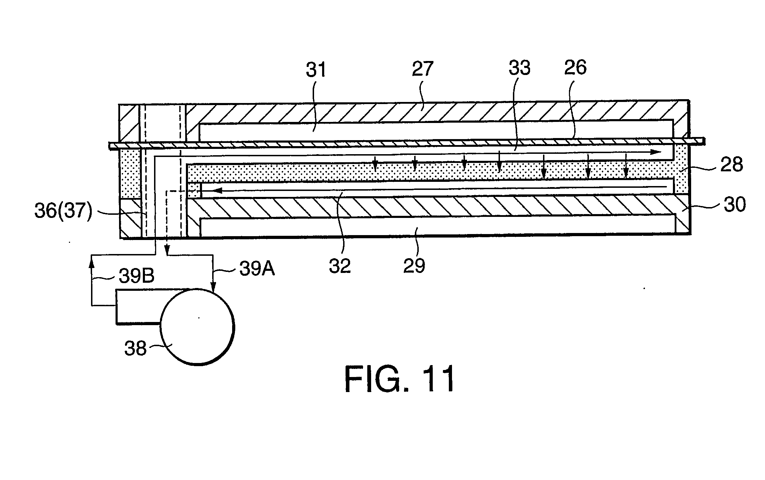

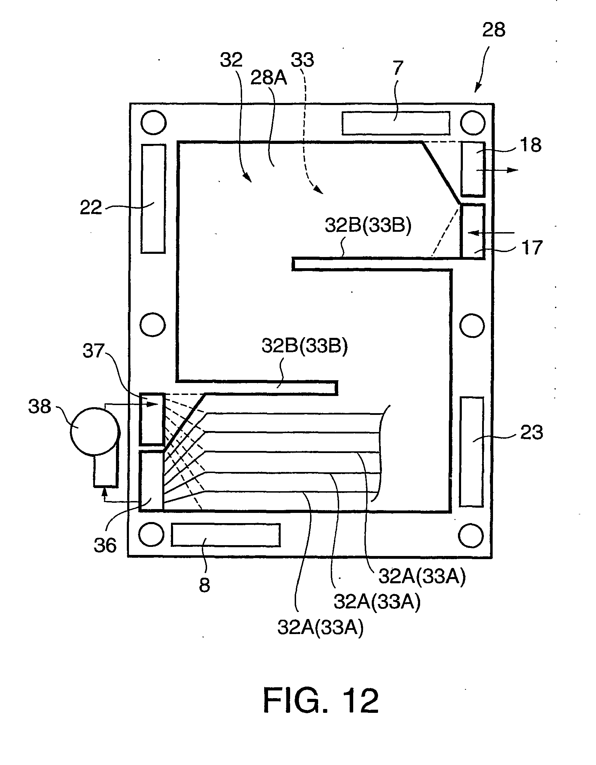

Referring to FIG. 11, the second outlet manifold 36 that communicates with the upstream cathode gas channel 32, and the second inlet manifold 37 that communicates with the downstream cathode gas channel 33 are formed in the porous BPP 28 as substitutes for the through hole 34. As shown in FIG. 12, the second outlet manifold 36 and the second inlet manifold 37 each pass longitudinally through the fuel cell stack 1 in nearly the same position as the through hole 34 of the first embodiment.

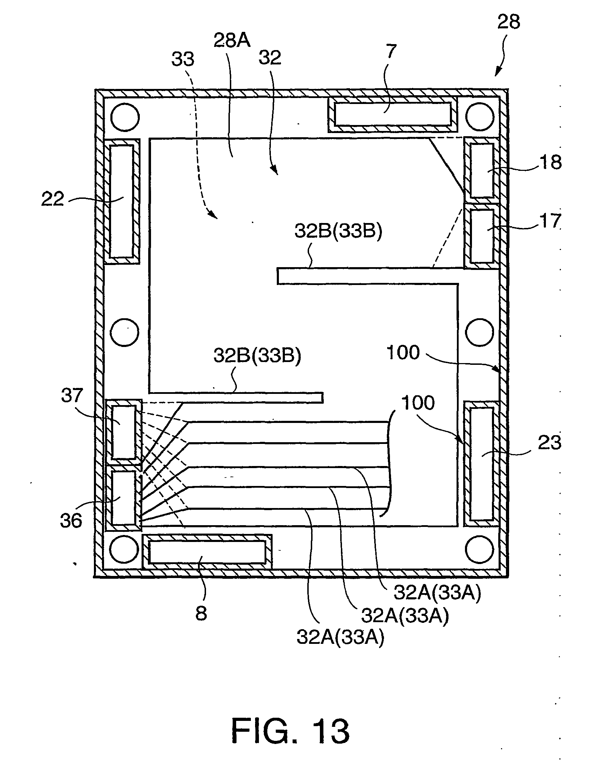

Referring to FIG. 13, an impermeable layer 100 is formed on the outer circumference of the porous BPP 28, and on wall surfaces of each of the manifolds 7, 8, 17, 18, 22, 23, 36, and 37 by impregnating a resin to the porous BPP 28 as shown by the hatchings in the figure.

Other structures of the power generation device are identical to those of the first embodiment.

The cathode gas that flows along the upstream cathode gas channel 32 is pulled into the blower 38 in this power generation device, and therefore the upstream cathode gas channel 32 takes on a negative pressure, while the downstream cathode gas channel 33 takes on a positive pressure due to the cathode gas being send out by the blower 38. A pressure difference thus develops between the upstream cathode gas channel 32 and the downstream cathode gas channel 33. Movement of liquid-phase water, which develops in the downstream cathode gas channel 33, to the upstream cathode gas channel 32 through the partition wall 28A is therefore promoted further.

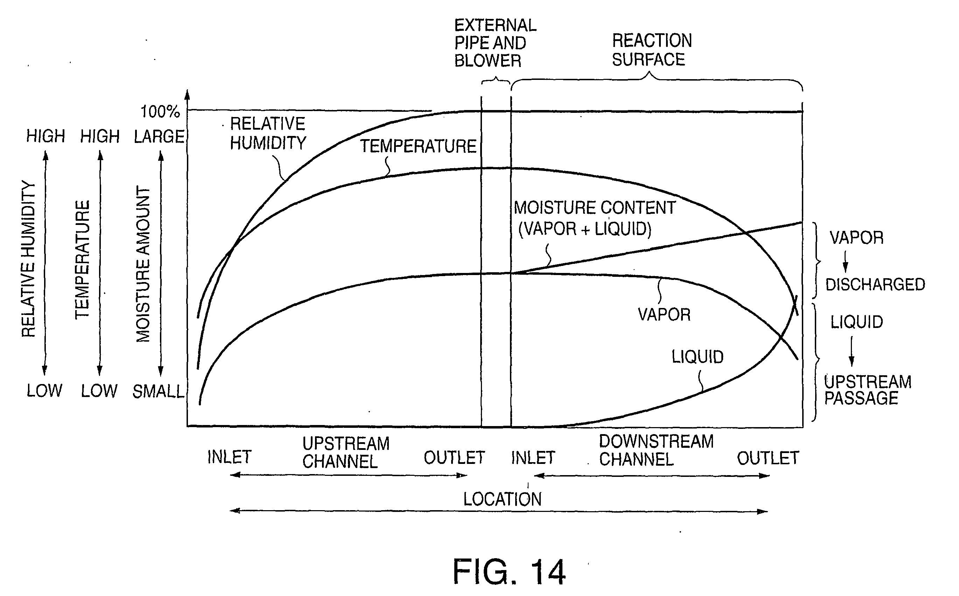

Referring to FIG. 14, the relative humidity between the upstream cathode gas channel 32 and the downstream cathode gas channel 33, the temperatures thereof, and the amount of moisture therein change in accordance with position. In the upstream cathode gas pathway 32, the temperature increases as the distance to the second outlet manifold 36 decreases due to heat exchange with the downstream cathode gas channel 33 through the partition wall 38A of the porous BPP 28. The amount of water vapor capable of being contained in the cathode gas therefore becomes greater. On the other hand, moisture that has passed through the partition wall 28A joins the cathode gas of the upstream cathode gas channel 32, so the relative humidity also increases as the distance to the second outlet manifold 36 decreases, and finally it reaches a hundred percent.

In the downstream cathode gas channel 33, the temperature decreases as the distance to the outlet manifold 18 decreases, as a result of heat exchange with the upstream cathode gas channel 32 through the partition wall 28A. As a result, the amount of moisture capable of being contained in the cathode gas is reduced, and excess moisture condenses. The condensed moisture moves to the upstream cathode gas channel 32 through the partition wall 28A. The amount of moisture capable of being contained in the cathode gas thus becomes smaller as the temperature in the vicinity of the outlet manifold 18 is reduced, and, accordingly, the amount of moisture discharged to the outside while contained in the cathode gas can be suppressed.

In order to reduce temperature changes when the cathode gas passes through the external pipe 39A that connects the blower 38 and the second outlet manifold 36, and the external pipe 39B that connects the blower 38 and the second inlet manifold 37, it is preferable to cover at least one of the external pipes 39A and 39B with a thermal insulating material.

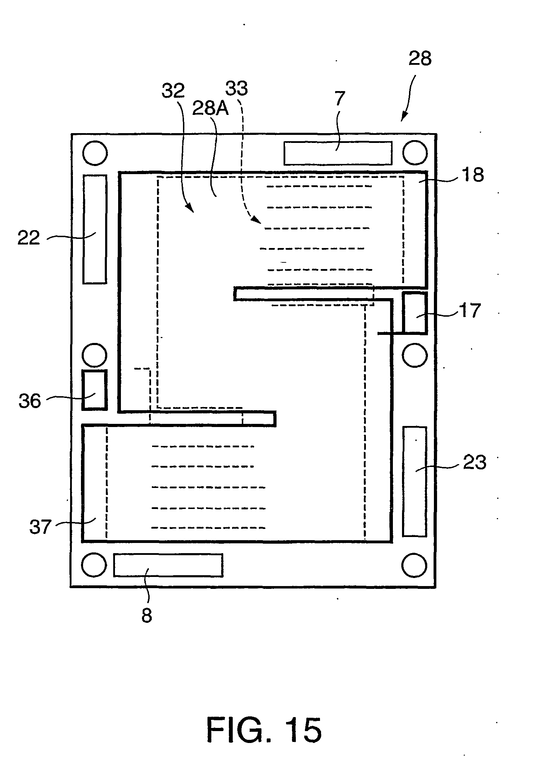

Referring to FIG. 15, a third embodiment of this invention will be described.

In this embodiment, the cross sectional area of the outlet manifold 18 is set larger than the cross sectional area of the inlet manifold 17, and the cross sectional area of the second inlet manifold 37 is set larger than the cross sectional area of the second outlet manifold 36. Other structures are identical to those of the second embodiment.

The MEA 26 faces only the downstream cathode gas channel 33 of the porous BPP 28, and does not face the upstream cathode gas channel 32. Therefore, it is necessary to make the flow of the cathode gas uniform in the downstream cathode gas channel 33, but it is not necessary to do so in the upstream cathode gas channel 32.

The widths of the cross section of the outlet manifold 18, which serves as an outlet of the downstream cathode gas channel 33, and the cross section of the second inlet manifold 37, which serves as an inlet of the downstream cathode gas channel 33, are increased until they become nearly equal to the width of the downstream cathode gas channel 33. Instead, the widths of the cross sections of the inlet manifold 17 and the second outlet manifold 36 are made smaller. By setting the cross sections of the inlet and outlet manifolds in this way, the flow of the cathode gas in the downstream cathode gas channel 33 is rendered uniform.

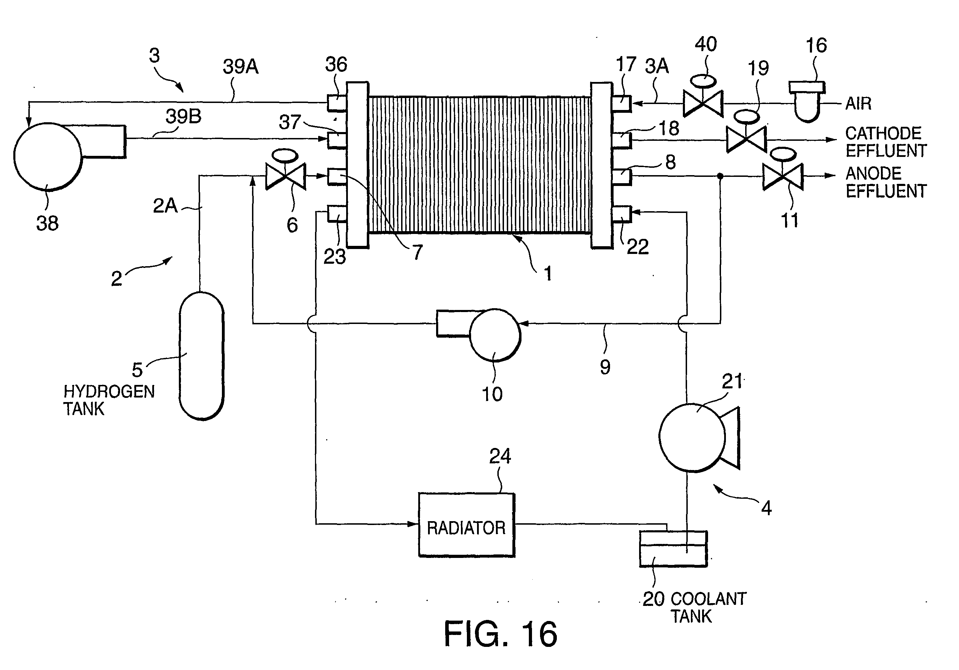

Referring to FIGs. 16 to 18, a fourth embodiment of this invention will be described.

Referring to FIG. 16, a power generation device according to this embodiment corresponds to the power generation device of the second embodiment in which a pressure regulating valve 40 is further provided in the cathode gas supply passage 3A.

The amount of moisture that moves from the downstream cathode gas channel 33 to the upstream cathode gas channel 32 through the partition wall 28A depends upon the pressure difference between the downstream cathode gas channel 33 and the upstream cathode gas channel 32.

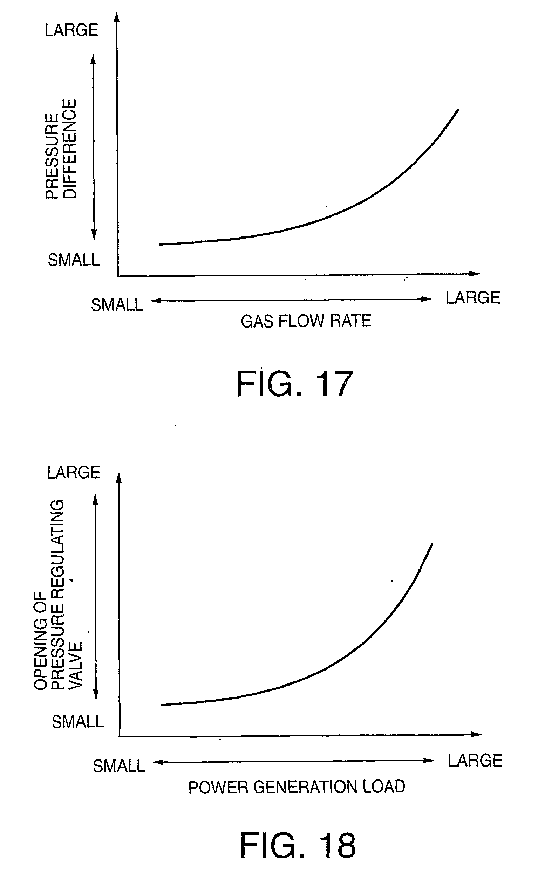

Referring to FIG. 17, the pressure difference between the downstream cathode gas channel 33 and the upstream cathode gas channel 32 becomes larger as the flow rate sent out by the blower 38 increases. The pressure difference between the downstream cathode gas channel 33 and the upstream cathode gas channel 32 is small if the flow rate sent out by the blower 38 is small, and the amount of movement of moisture through the partition wall 28A is also small.

By providing the pressure regulating valve 40 in addition to the pressure regulating valve 19, it becomes possible to set this pressure difference to arbitrary values. That is, for identical flow rates sent out by the blower, the pressure of the upstream cathode gas channel 32 drops when the opening of the pressure regulating valve 40 decreases, and the pressure of the downstream cathode gas channel increases when the opening of the pressure regulating valve 19 decreases.

In either case, the pressure difference between the pressure of the downstream cathode gas channel 33 and the pressure of the upstream cathode gas channel 32 increases, and the amount of moisture that moves through the partition wall 28A increases at the identical cathode gas flow rate.

When the power generation load on the fuel cell stack 1 is small, the flow rate of the cathode gas supplied is also small. The pressure difference between the downstream cathode gas channel 33 and the upstream cathode gas channel 32 is therefore also small. According to this embodiment, however, movement of a necessary amount of moisture through the partition wall 28A can be ensured by controlling the openings of the pressure regulating valve 40 and the pressure regulating valve 19.

Referring to FIG. 18, by reducing the openings of the pressure regulating valves 19 and 40 as the power generation load on the fuel cell stack 1 becomes smaller, the pressure difference between the downstream cathode gas channel 33 and the upstream cathode gas channel 32 can remain unchanged, so the amount of moisture moving through the partition wall 28A can also remain unchanged. The amount of moisture that moves through the partition wall 28A is ensured according to this embodiment even when the power generation load is small, and the flow rate of the cathode gas is small. Dryout in the upstream portion of the downstream cathode gas channel 33, and flooding in the downstream portion of the downstream cathode gas channel 33 are therefore prevented from occurring.

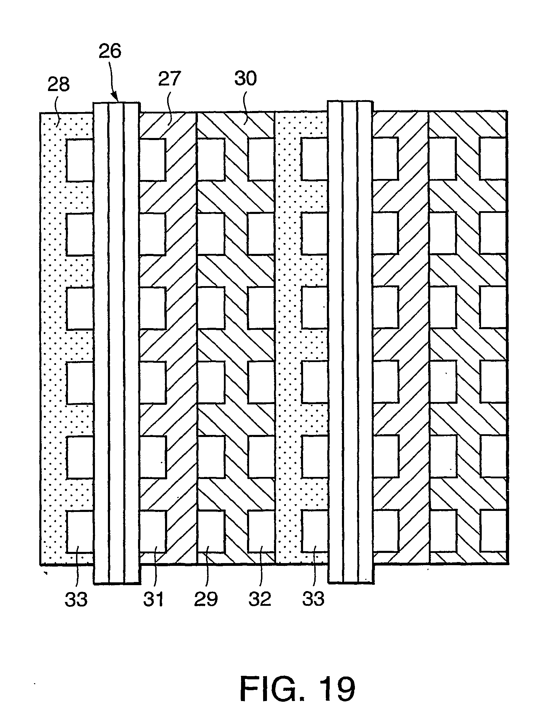

Referring to FIG. 19, a fifth embodiment of this invention will be described.

This embodiment relates to the structures of the porous BPP 28 and the second solid BPP 30 of a fuel cell. The upstream cathode gas channel 32 and the downstream cathode gas channel 33 are formed in the porous BPP 28 in the first embodiment, but the upstream cathode gas channel 32 is formed in the second solid BPP 30 in this embodiment, along with the coolant pathway 29. Only the downstream cathode gas channel 33 is formed in the porous BPP 28. Other features of the fuel cell are identical to those of the first embodiment.

The upstream cathode gas channel 32 and the downstream cathode gas channel 33 are also defined in this embodiment by the partition wall 28A that forms a portion of the porous BPP 28. Similarly to the first embodiment, moisture moves from the downstream cathode gas channel 33 to the upstream cathode gas channel 32 through the partition wall 28A, and therefore the moisture distribution of the MEA 26 can be made uniform.

The ribs 32A that partition the upstream cathode gas channel 32 are formed in the second solid BPP 30 according to this embodiment. The porous BPP 28 is constituted by a porous material,. The porous material is generally weaker in strength and more difficult in processing than a non-porous material. According to this embodiment, the amount of the porous material used is reduced by forming the ribs 32A in the second solid BPP 30, and therefore the structural strength of the fuel cell stack 1 can be increased, and the structure of the porous BPP 28 can be simplified. Further, if the amount of the porous material used is reduced, the amount of moisture that remains within the microscopic pores of the porous material in the fuel cell stack 1 in a stopped state is reduced. As a result, the amount of ice that must be melted when the fuel cell stack 1 is started at a temperature below zero is reduced, and a reduction in the startup time and a reduction in the amount of energy consumed in defrosting can be achieved.

It is also possible to integrate the first solid BPP 27 and the second solid BPP 30 in this embodiment.

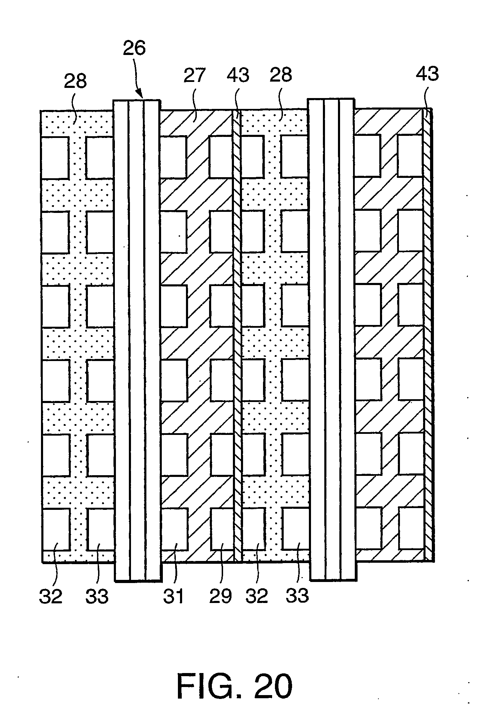

Referring to FIG. 20, a sixth embodiment of this invention will be described.

This embodiment corresponds to unifying the first solid BPP 27 and the second solid BPP 30 in the first embodiment, and disposing a separator 43 between the second solid BPP 30 and the porous BPP 28. The separator 43 may be formed of any material that is electrically conductive and functions to cutoff the coolant and the cathode gas. Effects similar to those of the first embodiment can be obtained according to this embodiment, while the number of bipolar plates can be reduced.

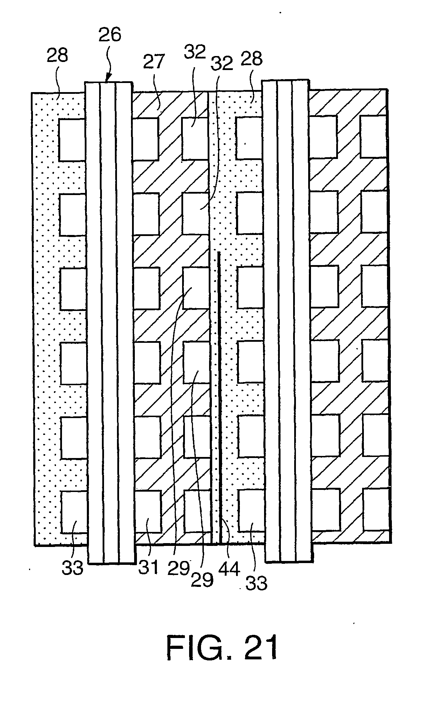

Referring to FIGs. 21 to 23, a seventh embodiment of invention will be described.

This embodiment corresponds to the fuel cell stack 1 of the second embodiment, in which the second solid BPP 30 is omitted by forming the anode gas channel 31, the coolant channel 29, and the upstream cathode gas channel 32 in the first solid BPP 27 and in which only the downstream cathode gas channel 33 is formed in the porous BPP 28.

Referring to FIG. 21, the coolant channel 29 and the upstream cathode gas channel 32 are formed on the same vertical plane of the first solid BPP 27. An impermeable portion 44, through which gases and coolants do not pass, is formed in the portion of the partition wall 28A of the porous BPP 28 that faces the coolant channel 29. The impermeable portion 44 is formed by impregnating a resin into the porous material, for example.

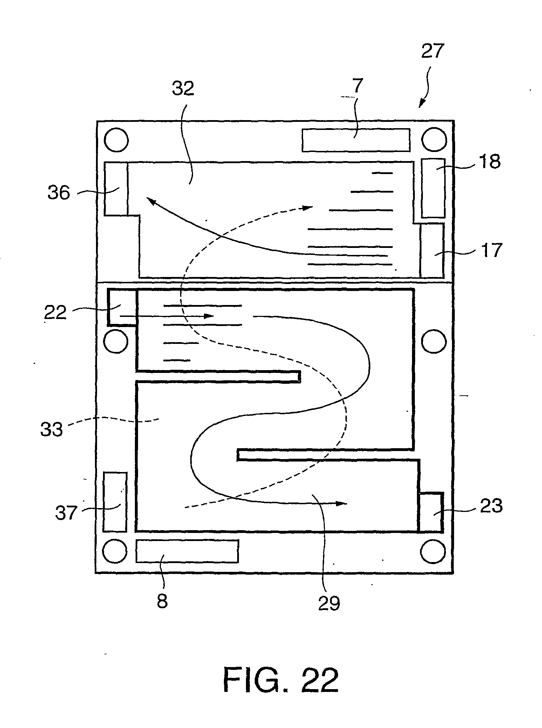

Referring to FIG. 22, the upstream cathode gas channel 32 is formed in an upper portion of the first solid BPP 27, and the coolant pathway 29 is formed in a lower portion of the first solid BPP 27. The cathode gas flows from the inlet manifold 17, which is disposed on the upper right-hand side of the figure, toward the second outlet manifold 37, which is disposed on the upper left-hand side of the figure, in the upstream cathode gas side of the figure, detours around the jetties 30B and flows toward the outlet manifold 23 in the coolant pathway 29.

On the other hand, in the porous BPP 28, which is disposed on the rear side of this cross section, the cathode gas flows in the downstream cathode gas channel 33 from the second inlet manifold 37, which is disposed in the lower left-hand side of the figure, toward the outlet manifold 18, which is disposed in the upper right-hand side of the figure, as shown by a dashed line arrow.

Accordingly, only the moisture of the cathode gas in the downstream portion of the downstream cathode gas channel 33 moves through the partition wall 28A and to the upstream cathode gas channel 32 in the fuel cell stack 1. The cathode gas in the downstream portion of the downstream cathode gas channel 33 contains a large amount of moisture, and this moisture is supplied to the upstream cathode gas channel 32 through the partition wall 28A. According to this arrangement also, flooding in the vicinity of the outlet manifold 18 as well as dryout in the vicinity of the second inlet manifold 37 can be prevented.

The moisture in the upstream portion of the downstream cathode gas channel 33 is prevented form moving to the upstream cathode gas channel 32 in this embodiment due to the impermeable portion 44 formed in the partition wall 38A. However, the amount of moisture generated in the upstream portion of the downstream cathode gas channel 33 is originally small, and flooding does not develop in the upstream portion of the downstream cathode gas channel 33 even if the moisture in this portion does not permeate the partition wall 28A.

In addition to the effects of the first embodiment, the fifth embodiment, and the sixth embodiment, the fuel cell becomes thinner according to this embodiment, so the length in the axial direction of the fuel cell stack 1 can be shortened.

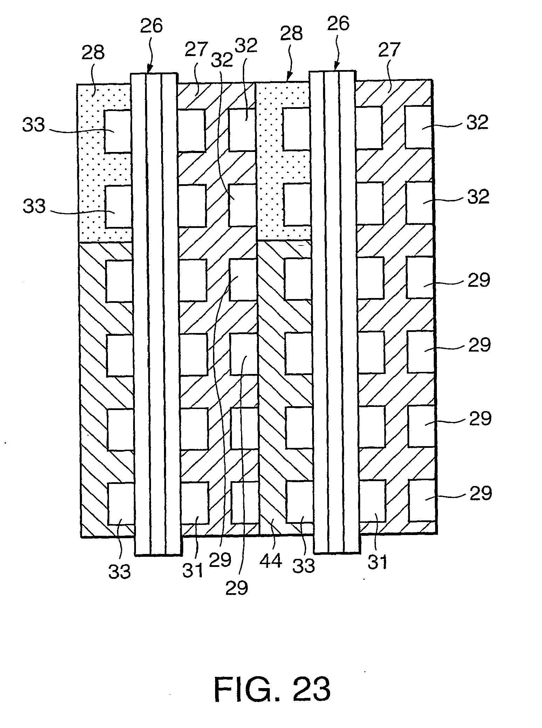

Next, referring to FIG. 23, a variation of the seventh embodiment will be described.

Herein, the impermeable portion 44 is formed over the entire portion of the porous BPP 28 that faces the coolant channel 29 instead of forming the impermeable portion on the partition wall 28A by impregnating a resin. The impermeable portion 44 is constituted by a material similar to that of the first solid BPP 27, and only the portion of the porous BPP 28 that faces the upstream cathode gas channel 32 is constituted by the porous material.

Since it is not necessary to impregnate a resin into the porous material in order to form the impermeable portion 44, the amount of the porous material used in a fuel cell can be further reduced.

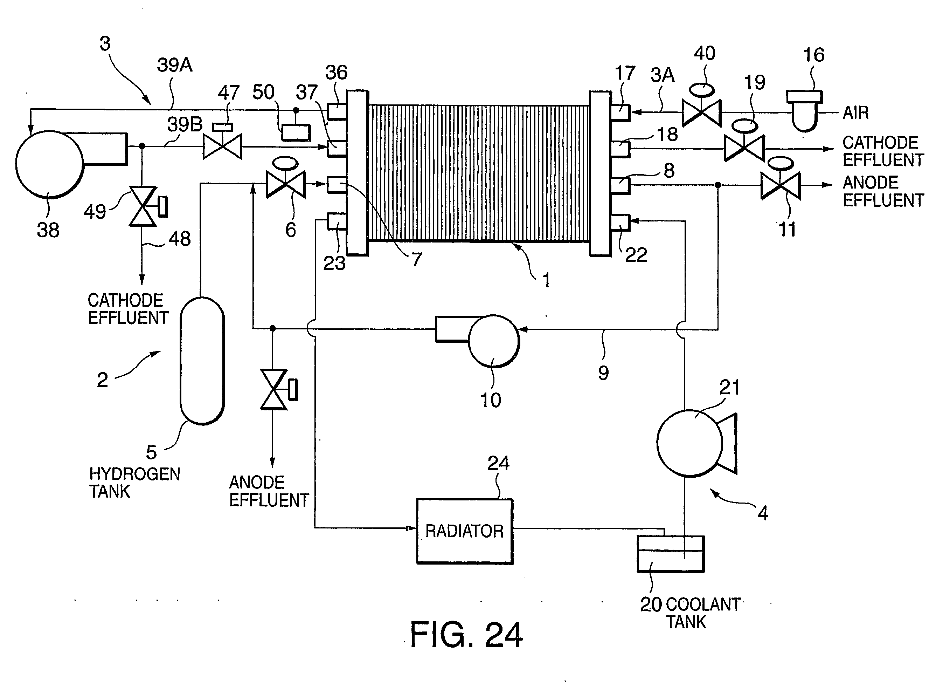

Referring to FIGs. 24 to 27, an eighth embodiment of this invention will be described.

A power generation device according to this embodiment is similar to the power generation device of the fourth embodiment. According to this embodiment, however, a first cutoff valve 47 is further provided in the external pipe 39B that guides the cathode gas sent out by the blower 38 to the second inlet manifold 37. In addition, a discharge pipe 48 is diverged via a second cutoff valve 49 from the external pipe 39B upstream of the first cutoff valve 47. Further, a liquid water trap 50 for trapping liquid phase moisture is provided in the external pipe 39A between the second outlet manifold 36 and the blower 38.

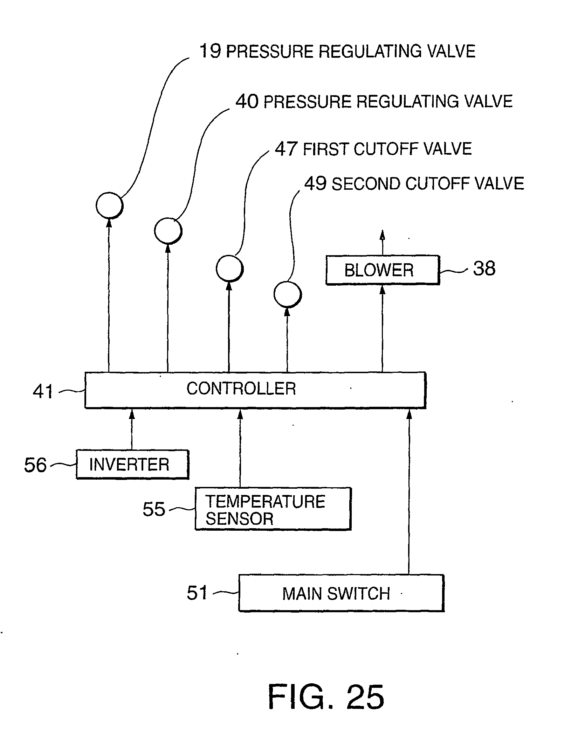

Referring to FIG. 25, the power generation device is further provided with a controller 41 for controlling the opening and closing operations of the pressure regulating valves 19 and 40, the opening and closing operations of the first cutoff valve 47 and the second cutoff valve 49, and operation of the blower 38.

The controller is constituted by a microcomputer that is provided with a central processing unit (CPU), a read only memory (ROM), a random access memory (RAM), and an input/output interface (I/O interface). It is also possible to constitute the controller by using a plurality of microcomputers.

In order to perform the above control, signals from a main switch 51 for commanding the power generation device to operate or to stop, a temperature sensor 55 for detecting an ambient temperature *T* of the fuel cell stack 1, and an inverter 56 for detecting the power generation load on the fuel cell stack 1 are respectively input to the controller 41.

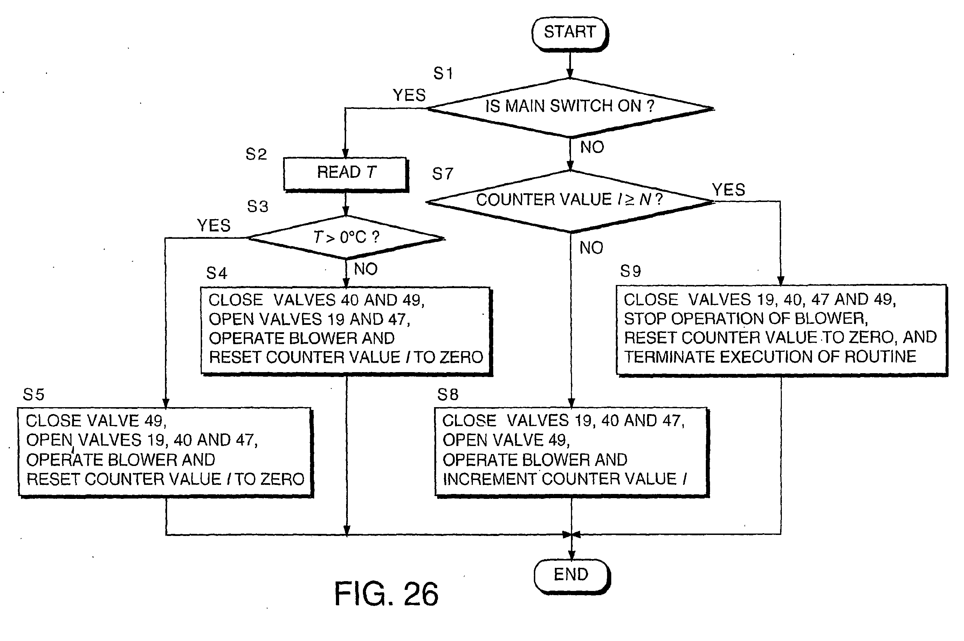

The controller 41 executes a cathode gas supply routine shown in FIG. 26 based on these signals. The routine execution starts in synchronism with the main switch 51 turned on, and thereafter the routine is repeatedly executed at intervals of ten milliseconds until termination of the routine execution is commanded within the routine.

First, in a step S1, the controller 41 determines whether or not the main switch 51 has been turned on.

When the main switch 51 has been turned on, in a step S2, the controller 41 reads in the ambient temperature *T* of the fuel cell stack 1, and, in a step S3, determines whether or not the temperature *T* is greater than zero degrees centigrade.

When the temperature *T* is not greater than zero degrees centigrade, in a step S4, the controller 41 closes the pressure regulating valve 40, opens the pressure control valve 19, opens the first cutoff valve 47, closes the second cutoff valve 49, and operates the blower 38. Finally, a counter value / is reset to zero. The controller 41 completes the routine after the processes of the step S4.

In the step S4, the blower 38 operates in a state where the cathode gas is not supplied, and the upstream cathode gas pathway 32 is negatively pressurized. As a result, a large pressure difference develops between the downstream cathode gas channel 33 and the upstream cathode gas channel 32. Cleaning of the microscopic pores of the partition wall 28A is thus performed.

In the step S3, when the temperature *T* is greater than zero degrees centigrade, the controller 41, in a step S5, opens the pressure regulating valve 40, opens the pressure control valve 19, opens the first cutoff valve 47, closes the second cutoff valve 49, and operates the blower 38. Further, the counter value *l* is reset to zero. The controller 41 completes the routine after the processes of the step S5. Power generation by the fuel cell stack 1 is performed in this state. The cathode gas supplied from the pressure regulating valve 40 to the fuel cell stack 1 passes through the upstream cathode gas channel 32 and is temporarily discharged to the external pipe 39A. After being urged by the blower 38, the cathode gas is supplied through the external pipe 39B to the downstream cathode gas channel 33 of the fuel cell stack 1, and is finally discharged to the ambient atmosphere through the pressure regulating valve 19.

Excess moisture that develops downstream of the downstream cathode gas channel 33 in this process passes through the partition wall 28A due to the pressure difference between the downstream cathode gas channel 33 and the upstream cathode gas channel 32. The cathode gas of the upstream cathode gas channel 32 is thus humidified. As explained with respect to the fourth embodiment, the pressure difference between the downstream cathode gas channel 33 and the upstream cathode gas channel 32, therefore the amount of moisture that passes through the partition wall 28A, can be maintained nearly constant by controlling the opening of the pressure regulating valve 40. In the step S5, the controller 41 controls the opening of the pressure regulating valve 40 in accordance with the power generation load so as to attain a predetermined amount of transferred moisture through the partition wall 28A. Dryout in the upstream portion of the downstream cathode gas channel 33 or flooding in the downstream portion of the downstream cathode gas channel 33 can thus be reliably prevented.

When it is determined in the step S1 that the main switch has not been turned on, in other words, when the main switch 51 is in the off position, in a step S7, the controller 41 determines whether or not the counter value / has reached a predetermined value *N*. The counter value *l* is a value corresponding to the amount of time that has elapsed after the switch 51 has been turned off.

When the counter value *l* has not reached the predetermined value *N*, in a step S8, the controller 41 closes both the pressure regulating valve 19 and the pressure regulating valve 40, closes the first cutoff valve 47, opens the second cutoff valve 49, and operates the blower 38. Thereafter, the controller 41 increments the counter value / and completes the routine.

According to the processing of the step S8, the upstream cathode gas channel 32 is negatively pressurized by the operation of the blower 38 in a state where the inflow and outflow of the cathode gas to and from the downstream cathode gas channel 33 are shut off. As a result, moisture that remains in the upstream cathode gas channel 32, in the microscopic pores of the porous BPP 28 including the partition wall 28A, and in the downstream cathode gas channel 33 is sucked out by the blower 38 and is trapped in the liquid water trap 50 provided in the external pipe 39A. The moisture that remains within the porous BPP 28 when the operation of the fuel cell stack 1 is stopped is thus expelled by repeating the processes of the step S8 such that the porous BPP 28 is placed in a dry state.

When on the other hand the counter value / has reached the predetermined value *N* in the step S7, the controller 41, in a step S9, closes the pressure regulating valves 19 and 40, the first cutoff valve 47, and the second cutoff valve 49, and stops operation of the blower 38. In addition, the counter value *l* is reset to zero, and subsequent execution of the routine is stopped. That is to say, the step S7 is executed only once when the counter value *l* has reached the predetermined value *N*. The routine is not executed subsequently until the main switch 51 is once again turned on.

By the execution of this routine, moisture within the porous BPP 28 is always removed over a predetermined amount of time when the fuel cell stack 1 stops operation. Moisture therefore does not freeze within the porous BPP 28, even if the temperature drops below zero degrees centigrade while operation of the fuel cell stack 1 is stopped. Since blockage of the cathode gas channels is thus prevented, thawing operations are not necessary for the porous BPP 28 when starting operation of the power generation device.

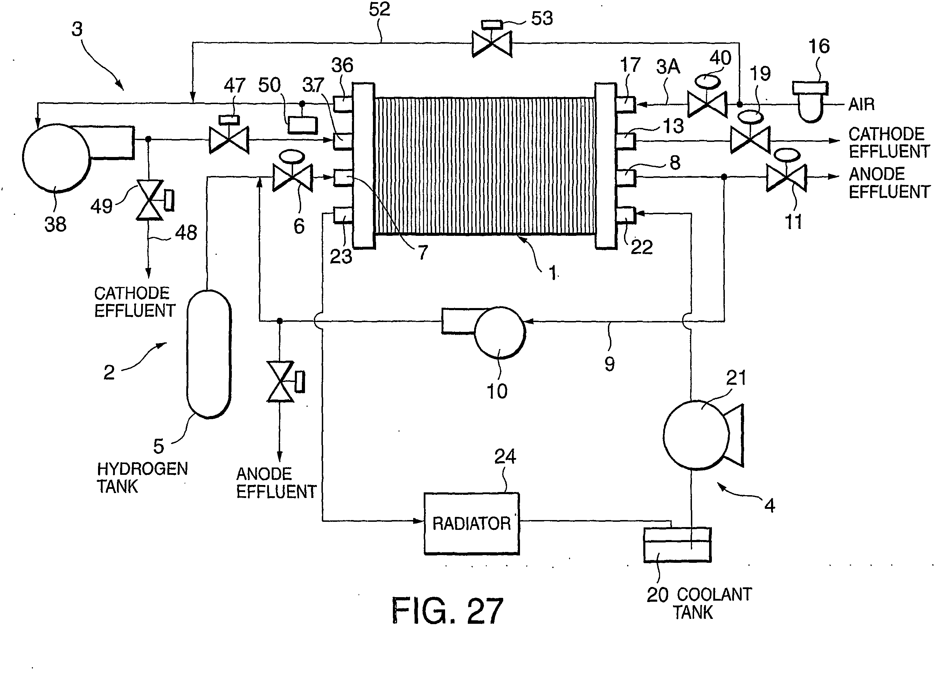

Referring to FIG. 27, a variation of the eighth embodiment will be described.

Herein, a bypass passage 52 that directly connects the cathode gas supply passage 3A and the external pipe 39A is additionally formed in the power generation device of FIG. 24, and a third cutoff valve 53 is provided for opening and closing the bypass passage 52. The bypass passage 52 bypasses the pressure regulating valve 40, the upstream cathode gas channel 32, and the liquid water trap 50.

The controller 41 executes the cathode gas supply routine of FIG. 26 in which the step S8 is omitted, an opening operation of the third cutoff valve 53 is added to the processing of the step S4 and a closing operation thereof is added to the processing of the steps S5 and S9.

As a result, the cathode gas that is aspirated into the blower 38 from the bypass passage 52 is supplied to the downstream cathode gas passage 32 in a startup mode. Since the step S8 is omitted according to this variation, moisture remaining in the upstream cathode gas pathway 32 and in the porous BPP 28 freezes when the temperature falls below zero degrees centigrade while the power generation is not performed.

However, power generation by the fuel cell stack 1 becomes possible by supplying the cathode gas directly to the downstream cathode gas channel 33. Ice existing in the upstream cathode gas channel 32 or in the microscopic pores of the porous BPP 28 is defrosted by reaction heat once the fuel cell stack 1 begins power generation. The controller 41 closes the third cutoff valve 53 and opens the pressure regulating valve 40 when the ambient temperature T has become greater than zero degrees centigrade, and thereafter the fuel cell stack 1 operates normally.

The energy necessary to remove moisture remaining within the porous BPP 28 when the fuel cell stack 1 stops operation can be saved by providing the bypass pathway 52 in this way.

Although the invention has been described above by reference to certain embodiments of the invention, the invention is not limited to the embodiments described above. Modifications and variations of the embodiments described above will occur to those skilled in the art, in light of the above teachings.

### INDUSTRIAL FIELD OF APPLICATION

As described above, this invention improves the transporting performance of moisture from a moist portion to a dry portion within a membrane electrode assembly (MEA) of a polymer electrolyte fuel cell (PEFC). Therefore, particularly good results are obtained by applying this invention to vehicle mounted polymer electrolyte fuel cells (PEFCs) to which it is difficult to supply water from outside.

The embodiments of this invention in which an exclusive property or privilege is claimed are defined as follows:

## Claims

1. A polymer electrolyte fuel cell comprising:
a membrane electrode assembly (26) comprising a polymer film (26A) and a pair of electrodes (26B, 26C) formed on both surfaces of the polymer film (26A);
a downstream gas supply channel (33) facing a specific electrode (26C) of the pair of the electrodes (26B, 26C); and
an upstream gas supply channel (32) which is not facing the specific electrode (26C) and supplies a reaction gas to the downstream gas supply channel (33) via a through hole (34);
**characterized by**
a partition wall (28A) which comprises a porous material having innumerable microscopic pores through which gasses and liquids can pass and is arranged substantially parallel to the polymer film (26A) so as to partition the downstream gas supply channel (33) and the upstream gas supply channel (32) such that an upstream portion of the upstream gas supply channel (32) overlaps with a downstream portion of the downstream gas supply channel (33).

2. The polymer electrolyte fuel cell as defined in Claim 1, **characterized in that** the porous material has a nature of preventing gasses from permeating when liquids exists therein.

3. The polymer electrolyte fuel cell as defined in Claim 1 or Claim 2, **characterized in that** the fuel cell further comprises a first plate (28) in which the partition wall (28A) and the downstream gas supply channel (33) are arranged such that downstream gas supply channel (33) is located between the partition wall (28A) and the specific electrode (26C).

4. The polymer electrolyte fuel cell as defined in Claim 3, **characterized in that** the first plate (28) further comprises the upstream gas supply channel (32) which overlaps with the downstream gas supply channel (33), with the partition wall (28A) being sandwiched therebetween.

5. The polymer electrolyte fuel cell as defined in Claim 4, **characterized in that** a the through hole (34) is formed through the partition wall (28A).

6. The polymer electrolyte fuel cell as defined in Claim 4 or Claim 5, **characterized in that** the first plate (28) comprises a plurality of ribs (32A) which separate a flow of the reaction gas in the upstream gas supply channel (32) into a plurality of parallel flows and a plurality of ribs (33A) which separate a flow of the reaction gas in the downstream gas supply channel (33) into a plurality of parallel flows.

7. The polymer electrolyte fuel cell as defined in any one of Claim 4 through Claim 6,
**characterized in that** the first plate (28) further comprises a pair of jetties (32A) which guide a flow of the reaction gas in the upstream gas supply channel (32) into a substantially S-shape, and a pair of jetties (33A) which guide a flow of the reaction gas in the downstream gas supply channel (33) into a substantially S-shape.

8. The polymer electrolyte fuel cell as defined in Claim 3, **characterized in that** the pair of electrodes comprise (26B, 26C) an anode (26B) and a cathode (26C), the specific electrode (26C) comprises the cathode (26C), and the fuel cell further comprises a second plate (27) made from a non-porous material, the second plate (27) comprising an anode gas supply channel (31) which faces the anode (26B).

9. The polymer electrolyte fuel cell as defined in Claim 8, **characterized in that** the fuel cell further comprises a third plate (30) made from a non-porous material, and the third plate (30) comprises a coolant supply channel (29) facing the second plate (27).

10. The polymer electrolyte fuel cell as defined in Claim 8 or Claim 9, **characterized in that** the second plate (27) comprises a coolant supply channel (29) which is partitioned from the anode gas supply channel (31).

11. The polymer electrolyte fuel cell as defined in any one of Claim 8 through Claim 10, **characterized in that** the fuel cell is laminated with a second polymer electrolyte fuel cell having an identical structure, and further comprises a separator (43) made from a material which does not permeate the coolant and the cathode gas, the separator (43) being interposed between the first plate (28) of the first fuel cell and the second plate (27) of the second fuel cell.

12. The polymer electrolyte fuel cell as defined in Claim 8, **characterized by** a third plate (30) which is made from a non-porous material and is located on the side of the first plate (28) opposite to the cathode (26C), and the upstream gas supply channel (32) is formed in the third plate (30).

13. The polymer electrolyte fuel cell as defined in Claim 12, **characterized in that** the third plate (30) further comprises a coolant supply channel (29) which is partitioned from the upstream gas supply channel (32).

14. The polymer electrolyte fuel cell as defined in Claim 8, **characterized in that** the fuel cell is laminated with a second polymer electrolyte fuel cell having an identical structure, the second plate (27) of the first fuel cell comprises the upstream gas supply channel (32) and a coolant channel (29) which are partitioned from each other while facing the partition wall (28A) of the first plate (28) of the second fuel cell, and the partition wall (28A) of the second fuel cell comprises an impermeable portion (44) which is formed of impregnated resin to prevent a coolant from permeating.

15. The polymer electrolyte fuel cell as defined in Claim 8, **characterized in that** the fuel cell is laminated with a second polymer electrolyte fuel cell having an identical structure, the second plate (27) of the first fuel cell comprises the upstream gas supply channel (32) and a coolant supply channel (29) which are partitioned from each other while facing the partition wall (28A) of the first plate (28) of the second fuel cell, and the first plate (28) of the second fuel cell comprises a porous portion made of a porous material and facing the upstream gas supply channel (32) of the first fuel cell, and a non-porous portion made of a non-porous material and facing the coolant supply channel (29) of the first fuel cell.

16. The polymer electrolyte fuel cell as defined in any one of Claim 3 through Claim 15, **characterized in that** the fuel cell is laminated with other fuel cells of an identical structure, the first plate (28) further comprises a first through hole (17) which constitutes an inlet manifold for distributing the cathode gas to the upstream gas supply channel (32) of each fuel cell, a second through hole (18) which constitutes an outlet manifold for collecting the cathode gas from the downstream gas supply channel (33) of each fuel cell, and an impermeable layer (100) formed on an inner circumferential surface of the first through hole (17) and the second through hole (18) and on an outer circumferential surface of the first plate (28), the impermeable layer (100) functioning to prevent the reaction gas from permeating into the first plate (28).

17. The polymer electrolyte fuel cell as defined in Claim 16, **characterized in that** a cross sectional surface area of the second through hole (18) is set larger than a cross sectional surface area of the first through hole (17).

18. A power generation device **characterized by**:
a fuel cell stack (1) comprising a plurality of polymer electrolyte fuel cells as defined in Claim 1, comprising:
a first inlet manifold (17) which distributes the reaction gas to the upstream gas supply channel (32) of each of the fuel cells;
a first outlet manifold (18) which collects the reaction gas from the downstream gas supply channel (33) of each of the fuel cells;
a second outlet manifold (36) which collects the reaction gas of the upstream gas supply channel (32) of each of the fuel cells; and
a second inlet manifold (37) which distributes the reaction gas to the downstream gas supply channel (33) of each of the fuel cells; and
a blower (38) which forcibly supplies the reaction gas collected by the second outlet manifold (36) to the second inlet manifold (37).

19. The power generation device as defined in Claim 18, **characterized by** a first external pipe (39A) which connects the second outlet manifold (36) and the blower (38), and a second external pipe (39B) which connects the blower (38) and the second inlet manifold (37), one of the first external pipe (39A) and the second external pipe (39B) being covered by a thermal insulation material.

20. The power generation device as defined in Claim 19, **characterized by** a pressure regulating valve (19) which regulates a pressure of the reaction gas flowing out from the first outlet manifold (18).

21. The power generation device as defined in Claim 20, **characterized by** a second pressure regulating valve (40) which regulates a pressure of the reaction gas supplied to the first inlet manifold (17).

22. The power generation device as defined in Claim 21, **characterized by** a sensor (56) which detects a power generation load on the fuel cell stack (1), and a programmable controller (41) programmed to control an opening of the second pressure regulating valve (40) according to the power generation load to maintain a pressure difference between the downstream gas supply channel (33) and the upstream gas supply channel (32) constant (S5).

23. The power generation device as defined in Claim 22, **characterized by** a first cutoff valve (47) which cuts off a flow of the reaction gas in the second external pipe (39B), a second cutoff valve (49) which discharges the reaction gas sent out by the blower (38) to the ambient atmosphere, and a main switch (51) which commands to start and stop operation of the fuel cell stack (1), wherein the controller (41) is further programmed to operate the blower (38) in a state where the first pressure regulating valve (19), the second pressure regulating valve (40), and the first cutoff valve (47) are all closed and the second cutoff valve (49) is opened, over a predetermined time period when the main switch (51) has commanded to stop operation of the fuel cell stack (1) (S8).

24. The power generation device as defined in Claim 23, **characterized by** a third cutoff valve (53) which supplies the reaction gas to the blower (38) without passing through the upstream gas supply channel (32).

25. The power generation device as defined in any one of Claim 19 through Claim 24, **characterized by** a liquid water trap (50) which traps liquid state moisture in the reaction gas which has flown out from the second outlet manifold (36) to the first external pipe (39A).

## Patentansprüche

1. Polymerelektrolyt-Brennstoffzelle, umfassend:
eine Membran-Elektroden-Anordnung (26) mit einer Polymerfolie (26A) und
einem Paar von Elektroden (26B, 26C), die auf beiden Oberflächen der Polymerfolie (26A) ausgebildet sind;
einen stromabwärtigen Gaszufuhrkanal (33), der einer bestimmten Elektrode (26C) des Paars von Elektroden (26B, 26C) zugewandt ist; und
einen stromaufwärtigen Gaszufuhrkanal (32), der der bestimmten Elektrode (26C) nicht zugewandt ist und über ein Durchgangsloch (34) ein Reaktionsgas zum stromabwärtigen Gaszufuhrkanal (33) zuführt;
**gekennzeichnet durch**:
eine Trennwand (28A), die ein poröses Material mit unzähligen mikroskopischen Poren umfasst, **durch** welche Gase und Flüssigkeiten hindurchtreten können, und die im Wesentlichen parallel zur Polymerfolie (26A) angeordnet ist, um den stromabwärtigen Gaszufuhrkanal (33) und den stromaufwärtigen Gaszufuhrkanal (32) so zu unterteilen, dass ein stromaufwärtiger Bereich des stromaufwärtigen Gaszufuhrkanals (32) mit einem stromabwärtigen Bereich des stromabwärtigen Gaszufuhrkanals (33) überlappt.

2. Polymerelektrolyt-Brennstoffzelle nach Anspruch 1, **dadurch gekennzeichnet, dass** das poröse Material derart gestaltet ist, dass ein Eindringen von Gasen verhindert wird, wenn Flüssigkeiten darin vorhanden sind.

3. Polymerelektrolyt-Brennstoffzelle nach Anspruch 1 oder Anspruch 2, **dadurch gekennzeichnet, dass** die Brennstoffzelle ferner eine erste Platte (28) umfasst, in der die Trennwand (28A) und der stromabwärtige Gaszufuhrkanal (33) angeordnet sind, so dass der stromabwärtige Gaszufuhrkanal (33) zwischen der Trennwand (28A) und der bestimmten Elektrode (26C) angeordnet ist.

4. Polymerelektrolyt-Brennstoffzelle nach Anspruch 3, **dadurch gekennzeichnet, dass** die erste Platte (28) ferner den stromaufwärtigen Gaszufuhrkanal (32) umfasst, der mit dem stromabwärtigen Gaszufuhrkanal (33) überlappt, wobei die Trennwand (28A) zwischen diesen eingeschoben ist.

5. Polymerelektrolyt-Brennstoffzelle nach Anspruch 4, **dadurch gekennzeichnet, dass** das Durchgangsloch (34) durch die Trennwand (28A) ausgebildet ist.

6. Polymerelektrolyt-Brennstoffzelle nach Anspruch 4 oder Anspruch 5, **dadurch gekennzeichnet, dass** die erste Platte (28) eine Vielzahl von Rippen (32A), die einen Strom des Reaktionsgases in dem stromaufwärtigen Gaszufuhrkanal (32) in eine Vielzahl von parallelen Strömen trennt, und eine Vielzahl von Rippen (33A), die einen Strom des Reaktionsgases in dem stromabwärtigen Gaszufuhrkanal (33) in eine Vielzahl von parallelen Strömen trennt, umfasst.

7. Polymerelektrolyt-Brennstoffzelle nach einem der Ansprüche 4 bis 6, **dadurch gekennzeichnet, dass** die erste Platte (28) ferner ein Paar von Stegen (32A), die einen Strom des Reaktionsgases in dem stromaufwärtigen Gaszufuhrkanal (32) in eine im Wesentlichen S-Form lenkt, und ein Paar von Stegen (33A), die einen Strom des Reaktionsgases in dem stromabwärtigen Gaszufuhrkanal (33) in eine im Wesentlichen S-Form lenkt, umfasst.

8. Polymerelektrolyt-Brennstoffzelle nach Anspruch 3, **dadurch gekennzeichnet, dass** das Paar von Elektroden (26B, 26C) eine Anode (26B) und eine Kathode (26C) umfasst, die bestimmte Elektrode (26C) die Kathode (26C) umfasst, und die Brennstoffzelle ferner eine zweite Platte (27) umfasst, die aus einem nicht-porösen Material gefertigt ist, wobei die zweite Platte (27) einen Anodengaszufuhrkanal (31) umfasst, der der Anode (26B) zugewandt ist.

9. Polymerelektrolyt-Brennstoffzelle nach Anspruch 8, **dadurch gekennzeichnet, dass** die Brennstoffzelle eine dritte Platte (30) umfasst, die aus einem nicht-porösen Material gefertigt ist, und die dritte Platte (30) einen Kühlmittelzufuhrkanal (29) umfasst, der der zweiten Platte (27) zugewandt ist.

10. Polymerelektrolyt-Brennstoffzelle nach Anspruch 8 oder Anspruch 9, **dadurch gekennzeichnet, dass** die zweite Platte (27) einen Kühlmittelzufuhrkanal (29) umfasst, der vom Anodengaszufuhrkanal (31) abgetrennt ist.

11. Polymerelektrolyt-Brennstoffzelle nach einem der Ansprüche 8 bis 10, **dadurch gekennzeichnet, dass** die Brennstoffzelle mit einer zweiten Polymerelektrolyt-Brennstoffzelle mit einem identischen Aufbau geschichtet ist und ferner einen Separator (43) umfasst, der aus einem Material gefertigt ist, welches das Kühlmittel und das Kathodengas nicht durchdringt, wobei der Separator (43) zwischen der ersten Platte (28) der ersten Brennstoffzelle und der zweiten Platte (27) der zweiten Brennstoffzelle eingefügt ist.

12. Polymerelektrolyt-Brennstoffzelle nach Anspruch 8, **gekennzeichnet durch** eine dritte Platte (30), die aus einem nicht-porösen Material gefertigt ist und auf der Seite der ersten Platte (28) gegenüber der Kathode (26C) angeordnet ist, und der stromaufwärtige Gaszufuhrkanal (32) ist in der dritten Platte (30) ausgebildet.

13. Polymerelektrolyt-Brennstoffzelle nach Anspruch 12, **dadurch gekennzeichnet, dass** die dritte Platte (30) ferner einen Kühlmittelzufuhrkanal (29) umfasst, der vom stromaufwärtigen Gaszufuhrkanal (32) abgetrennt ist.

14. Polymerelektrolyt-Brennstoffzelle nach Anspruch 8, **dadurch gekennzeichnet, dass** die Brennstoffzelle mit einer zweiten Polymerelektrolyt-Brennstoffzelle mit einem identischen Aufbau geschichtet ist, die zweite Platte (27) der ersten Brennstoffzelle den stromaufwärtigen Gaszufuhrkanal (32) und einen Kühlmittelkanal (29) umfasst, die voneinander getrennt sind, während sie der Trennwand (28A) der ersten Platte (28) der zweiten Brennstoffzelle zugewandt sind, und die Trennwand (28A) der zweiten Brennstoffzelle einen undurchlässigen Bereich (44) umfasst, der aus imprägniertem Harz gebildet ist, um ein Eindringen eines Kühlmittels zu verhindern.

15. Polymerelektrolyt-Brennstoffzelle nach Anspruch 8, **dadurch gekennzeichnet, dass** die Brennstoffzelle mit einer zweiten Polymerelektrolyt-Brennstoffzelle mit einem identischen Aufbau geschichtet ist, die zweite Platte (27) der ersten Brennstoffzelle den stromaufwärtigen Gaszufuhrkanal (32) und einen Kühlmittelzufuhrkanal (29) umfasst, die voneinander getrennt sind, während sie der Trennwand (28A) der ersten Platte (28) der zweiten Brennstoffzelle zugewandt sind, und die erste Platte (28) der zweiten Brennstoffzelle einen porösen Bereich, der aus einem porösen Material gefertigt ist und dem stromaufwärtigen Gaszufuhrkanal (32) der ersten Brennstoffzelle zugewandt ist, und einen nicht-porösen Bereich umfasst, der aus einem nicht-porösen Material gefertigt ist und dem Kühlmittelzufuhrkanal (29) der ersten Brennstoffzelle zugewandt ist.

16. Polymerelektrolyt-Brennstoffzelle nach einem der Ansprüche 3 bis 15, **dadurch gekennzeichnet, dass** die Brennstoffzelle mit anderen Brennstoffzellen mit einem identischen Aufbau geschichtet ist, die erste Platte (28) ferner ein erstes Durchgangsloch (17), das einen Ansaugkrümmer zum Verteilen des Kathodengases zum stromaufwärtigen Gaszufuhrkanal (32) jeder Brennstoffzelle darstellt, ein zweites Durchgangsloch (18), das einen Auslasskrümmer zum Sammeln des Kathodengases von dem stromabwärtigen Gaszufuhrkanal (33) jeder Brennstoffzelle darstellt, und eine undurchlässige Schicht (100) umfasst, die auf einer Innenumfangsfläche des ersten Durchgangslochs (17) und des zweiten Durchgangslochs (18) und auf einer Außenumfangsfläche der ersten Platte (28) ausgebildet ist, wobei die undurchlässige Schicht (100) dazu dient, ein Eindringen des Reaktionsgases in die erste Platte (28) zu verhindern.

17. Polymerelektrolyt-Brennstoffzelle nach Anspruch 16, **dadurch gekennzeichnet, dass** ein Querschnitts-Oberflächenbereich des zweiten Durchgangslochs (18) größer festgelegt ist als ein Querschnitts-Oberflächenbereich des ersten Durchgangslochs (17).

18. Energieerzeugungsvorrichtung, **gekennzeichnet durch**:
einen Brennstoffzellenstapel (1) mit einer Vielzahl von Polymerelektrolyt-Brennstoffzellen nach Anspruch 1, umfassend:
einen ersten Ansaugkrümmer (17), der das Reaktionsgas zum stromaufwärtigen Gaszufuhrkanal (32) jeder der Brennstoffzellen verteilt;
einen ersten Auslasskrümmer (18), der das Reaktionsgas von dem stromabwärtigen Gaszufuhrkanal (33) jeder der Brennstoffzellen sammelt;
einen zweiten Auslasskrümmer (36), der das Reaktionsgas des stromaufwärtigen Gaszufuhrkanals (32) jeder der Brennstoffzellen sammelt; und
einen zweiten Ansaugkrümmer (37), der das Reaktionsgas zu dem stromabwärtigen Gaszufuhrkanal (33) jeder der Brennstoffzellen verteilt; und
ein Gebläse (38), welches das vom zweiten Auslasskrümmer (36) gesammelte Reaktionsgas zwangsweise zum zweiten Ansaugkrümmer (37) zuführt.

19. Energieerzeugungsvorrichtung nach Anspruch 18, **gekennzeichnet durch** ein erstes Außenrohr (39A), das den zweiten Auslasskrümmer (36) und das Gebläse (38) verbindet, und ein zweites Außenrohr (39B), das das Gebläse (38) und den zweiten Ansaugkrümmer (37) verbindet, wobei das erste Außenrohr (39A) oder das zweite Außenrohr (39B) von einem thermischen Isoliermaterial bedeckt sind.

20. Energieerzeugungsvorrichtung nach Anspruch 19, **gekennzeichnet durch** ein Druckregulierungsventil (19), das einen Druck des Reaktionsgases, das aus dem ersten Auslasskrümmer (18) strömt, reguliert.

21. Energieerzeugungsvorrichtung nach Anspruch 20, **gekennzeichnet durch** ein zweites Druckregulierungsventil (40), das einen Druck des Reaktionsgases, das zum ersten Einlasskrümmer (17) zugeführt wird, reguliert.

22. Energieerzeugungsvorrichtung nach Anspruch 21, **gekennzeichnet durch** einen Sensor (56), der eine Energieerzeugungslast auf den Brennstoffzellenstapel (1) erfasst, und eine programmierbare Steuerung (41), die programmiert ist, eine Öffnung des zweiten Druckregulierungsventils (40) gemäß der Energieerzeugungslast zu steuern, um einen Druckunterschied zwischen dem stromabwärtigen Gaszufuhrkanal (33) und dem stromaufwärtigen Gaszufuhrkanal (32) konstant aufrechtzuerhalten (S5).

23. Energieerzeugungsvorrichtung nach Anspruch 22, **gekennzeichnet durch** ein erstes Absperrventil (47), das einen Strom des Reaktionsgases in dem zweiten Außenrohr (39B) unterbricht, ein zweites Absperrventil (49), das das vom Gebläse (38) ausgeblasene Reaktionsgas in die Umgebungsatmosphäre ausgibt, und einen Hauptschalter (51), der Starten und Stoppen des Brennstoffstapels (1) befiehlt, wobei die Steuerung (41) ferner programmiert ist, das Gebläse (38) in einem Zustand, wenn das erste Druckregulierungsventil (19), das zweite Druckregulierungsventil (40) und das erste Absperrventil (47) alle geschlossen sind und das zweite Absperrventil (49) geöffnet ist, über einen vorbestimmten Zeitraum zu betätigen, wenn der Hauptschalter (51) ein Anhalten der Betätigung des Brennstoffzellenstapels (1) befohlen hat (S8).

24. Energieerzeugungsvorrichtung nach Anspruch 23, **gekennzeichnet durch** ein drittes Absperrventil (53), welches das Reaktionsgas zum Gebläse (38) zuführt, ohne den stromaufwärtigen Gaszufuhrkanal (32) zu passieren.

25. Energieerzeugungsvorrichtung nach einem der Ansprüche 19 bis 24, **gekennzeichnet durch** einen Flüssigwasserabscheider (50), der Feuchtigkeit im flüssigen Zustand im Reaktionsgas, das vom zweiten Auslasskrümmer (36) zum ersten Außenrohr (39A) geströmt ist, abzuscheiden.

## Revendications

1. Pile à combustible à électrolyte polymère comprenant :
un ensemble électrode à membrane (26) comprenant un film polymère (26A) et une paire d'électrodes (26B, 26C) formées sur les deux surfaces du film polymère (26A) ;
un canal d'alimentation en gaz aval (33) placé en face d'une électrode spécifique (26C) de la paire d'électrodes (26B, 26C) ; et
un canal d'alimentation en gaz amont (32) qui n'est pas placé en face de l'électrode spécifique (26C) et qui fournit un gaz réactionnel au canal d'alimentation en gaz aval (33) par l'intermédiaire d'un orifice de passage (34) ;
**caractérisée par**
une paroi de séparation (28A) comprenant un matériau poreux contenant d'innombrables pores microscopiques à travers lesquels des gaz et des liquides peuvent passer et qui est disposée sensiblement parallèlement au film polymère (26A) pour séparer le canal d'alimentation en gaz aval (33) et le canal d'alimentation en gaz amont (32), de sorte qu'une partie amont du canal d'alimentation en gaz amont (32) recouvre une partie aval du canal d'alimentation en gaz aval (33).

2. Pile à combustible à électrolyte polymère selon la revendication 1, **caractérisée en ce que** le matériau poreux empêche par nature la perméation des gaz quand des liquides existent dedans.

3. Pile à combustible à électrolyte polymère selon la revendication 1 ou la revendication 2, **caractérisée en ce que** la pile à combustible comprend une première plaque (28) dans laquelle la paroi de séparation (28A) et le canal d'alimentation en gaz aval (33) sont disposés, de sorte que le canal d'alimentation en gaz aval (33) est situé entre la paroi de séparation (28A) et l'électrode spécifique (26C).

4. Pile à combustible à électrolyte polymère selon la revendication 3, **caractérisée en ce que** la première plaque (28) comprend en outre le canal d'alimentation en gaz amont (32) qui recouvre le canal d'alimentation en gaz aval (33), la paroi de séparation (28A) étant intercalée entre ceux-ci.

5. Pile à combustible à électrolyte polymère selon la revendication 4, **caractérisée en ce que** l'orifice de passage (34) est formé à travers la paroi de séparation (28A).

6. Pile à combustible à électrolyte polymère selon la revendication 4 ou la revendication 5, **caractérisée en ce que** la première plaque (28) comprend une pluralité de nervures (32A) qui séparent un flux du gaz réactionnel dans le canal d'alimentation en gaz amont (32) en une pluralité de flux parallèles et une pluralité de nervures (33A) qui séparent un flux du gaz réactionnel dans le canal d'alimentation en gaz aval (33) en une pluralité de flux parallèles.

7. Pile à combustible à électrolyte polymère selon l'une quelconque des revendications 4 à 6, **caractérisée en ce que** la première plaque (28) comprend en outre une paire d'épis (32A) qui guident un flux du gaz réactionnel dans le canal d'alimentation en gaz amont (32) sous une forme sensiblement en S, et une paire d'épis (33A) qui guident un flux du gaz réactionnel dans le canal d'alimentation en gaz aval (33) sous une forme sensiblement en S.

8. Pile à combustible à électrolyte polymère selon la revendication 3, **caractérisée en ce que** la paire d'électrodes comprend (26B, 26C) une anode (26B) et une cathode (26C), l'électrode spécifique (26C) comprend la cathode (26C) et la pile à combustible comprend en outre une seconde plaque (27) faite d'un matériau non poreux, la seconde plaque (27) comprenant un canal d'alimentation en gaz anodique (31) se trouvant en face de l'anode (26B).

9. Pile à combustible à électrolyte polymère selon la revendication 8, **caractérisée en ce que** la pile à combustible comprend en outre une troisième plaque (30) faite d'un matériau non poreux, et la troisième plaque (30) comprend un canal d'alimentation en fluide de refroidissement (29) se trouvant en face de la seconde plaque (27).

10. Pile à combustible à électrolyte polymère selon la revendication 8 ou la revendication 9, **caractérisée en ce que** la seconde plaque (27) comprend un canal d'alimentation en fluide de refroidissement (29) séparé du canal d'alimentation en gaz anodique (31) par une paroi.

11. Pile à combustible à électrolyte polymère selon l'une quelconque des revendications 8 à 10, **caractérisée en ce que** la pile à combustible est stratifiée sur une seconde pile à combustible à électrolyte polymère de structure identique, et comprend en outre un séparateur (43) fait d'un matériau imperméable au fluide de refroidissement et au gaz cathodique, le séparateur (43) étant intercalé entre la première plaque (28) de la première pile à combustible et la seconde plaque (27) de la seconde pile à combustible.

12. Pile à combustible à électrolyte polymère selon la revendication 8, **caractérisée par** une troisième plaque (30) faite d'un matériau non poreux et située sur le côté de la première plaque (28) opposé à la cathode (26C), et le canal d'alimentation en gaz amont (32) est formé dans la troisième plaque (30).

13. Pile à combustible à électrolyte polymère selon la revendication 12, **caractérisée en ce que** la troisième plaque (30) comprend un canal d'alimentation en fluide de refroidissement (29) séparé du canal d'alimentation en gaz amont (32) par une paroi.

14. Pile à combustible à électrolyte polymère selon la revendication 8, **caractérisée en ce que** la pile à combustible est stratifiée sur une seconde pile à combustible à électrolyte polymère de structure identique, la seconde plaque (27) de la première pile à combustible comprend le canal d'alimentation en gaz amont (32) et un canal pour fluide de refroidissement (29) séparés l'un de l'autre par une paroi tout en se trouvant en face de la paroi de séparation (28A) de la première plaque (28) de la seconde pile à combustible, et la paroi de séparation (28A) de la seconde pile à combustible comprend une partie imperméable (44) qui est formée d'une résine imprégnée pour empêcher la perméation d'un fluide de refroidissement.

15. Pile à combustible à électrolyte polymère selon la revendication 8, **caractérisée en ce que** la pile à combustible est stratifiée sur une seconde pile à combustible à électrolyte polymère de structure identique, la seconde plaque (27) de la première pile à combustible comprend le canal d'alimentation en gaz amont (32) et un canal d'alimentation en fluide de refroidissement (29) séparés l'un de l'autre par une paroi tout en se trouvant en face de la paroi de séparation (28A) de la première plaque (28) de la seconde pile à combustible, et la première plaque (28) de la seconde pile à combustible comprend une partie poreuse faite d'un matériau poreux et se trouvant en face du canal d'alimentation en gaz amont (32) de la première pile à combustible, et une partie non poreuse faite d'un matériau non poreux et se trouvant en face du canal d'alimentation en fluide de refroidissement (29) de la première pile à combustible.

16. Pile à combustible à électrolyte polymère selon l'une quelconque des revendications 3 à 15, **caractérisée en ce que** la pile à combustible est stratifiée sur d'autres piles à combustible de structure identique, la première plaque (28) comprend en outre un premier orifice de passage (17) qui constitue un distributeur d'admission pour distribuer le gaz cathodique au canal d'alimentation en gaz amont (32) de chaque pile à combustible, un second orifice de passage (18) qui constitue un distributeur de sortie servant à collecter le gaz cathodique provenant du canal d'alimentation en gaz aval (33) de chaque pile à combustible, et une couche imperméable (100) formée sur une surface circonférentielle interne du premier orifice de passage (17) et du second orifice de passage (18) et sur une surface circonférentielle externe de la première plaque (28), la couche imperméable (100) ayant pour fonction d'empêcher la perméation du gaz réactionnel dans la première plaque (28).

17. Pile à combustible à électrolyte polymère selon la revendication 16, **caractérisée en ce qu'**une superficie en coupe du second orifice de passage (18) est fixée plus grande qu'une superficie en coupe du premier orifice de passage (17).

18. Dispositif de production d'électricité **caractérisé par** :
un empilement de piles à combustible (1) comprenant une pluralité de piles à combustible à électrolyte polymère selon la revendication 1, comprenant :
- un premier distributeur d'admission (17) qui distribue le gaz réactionnel au canal d'alimentation en gaz amont (32) de chacune des piles à combustible ;
- un premier distributeur de sortie (18) qui collecte le gaz réactionnel provenant du canal d'alimentation en gaz aval (33) de chacune des piles à combustible ;
- un second distributeur de sortie (36) qui collecte le gaz réactionnel du canal d'alimentation en gaz amont (32) de chacune des piles à combustible ;
- un second distributeur d'admission (37) qui distribue le gaz réactionnel au canal d'alimentation en gaz aval (33) de chacune des piles à combustible ; et
une soufflante (38) qui force l'introduction du gaz réactionnel collecté par le second distributeur de sortie (36) dans le second distributeur d'admission (37).

19. Dispositif de production d'électricité selon la revendication 18, **caractérisé par** une première conduite externe (39A) qui connecte le second distributeur de sortie (36) et la soufflante (38), et une seconde conduite externe (39B) qui connecte la soufflante (38) et le second distributeur d'admission (37), une parmi la première conduite externe (39A) et la seconde conduite externe (39B) étant recouverte par un matériau d'isolement thermique.

20. Dispositif de production d'électricité selon la revendication 19, **caractérisé par** une valve régulatrice de pression (19) qui régule une pression du gaz réactionnel sortant du premier distributeur de sortie (18).

21. Dispositif de production d'électricité selon la revendication 20, **caractérisé par** une seconde valve régulatrice de pression (40) qui régule une pression du gaz réactionnel fourni au premier distributeur d'admission (17).

22. Dispositif de production d'électricité selon la revendication 21, **caractérisé par** un capteur (56) qui détecte une charge de production d'électricité sur l'empilement de piles à combustible (1), et un dispositif de commande programmable (41) programmé pour commander une ouverture de la seconde valve régulatrice de pression (40) en fonction de la charge de production d'électricité afin de maintenir une différence de pression entre le canal d'alimentation en gaz aval (33) et le canal d'alimentation en gaz amont (32) constante (S5).

23. Dispositif de production d'électricité selon la revendication 22, **caractérisé par** une première valve d'isolement (47) qui isole un flux du gaz réactionnel dans la seconde conduite externe (39B), une seconde valve d'isolement (49) qui décharge le gaz réactionnel envoyé par la soufflante (38) dans l'atmosphère ambiante, et un interrupteur principal (51) qui commande l'opération de démarrage et d'arrêt de l'empilement de piles à combustible (1), dans lequel le dispositif de commande (41) est programmé en outre pour faire fonctionner la soufflante (38) à un moment où la première valve régulatrice de pression (19), la seconde valve régulatrice de pression (40) et la première valeur d'isolement (47) sont toutes fermées et la seconde valve d'isolement (49) est ouverte, pendant une durée prédéterminée quand l'interrupteur principal (51) a commandé l'arrêt du fonctionnement de l'empilement de piles à combustible (1) (S8).

24. Dispositif de production d'électricité selon la revendication 23, **caractérisé par** une troisième valve d'isolement (53) qui fournit le gaz réactionnel à la soufflante (38) sans passer par le canal d'alimentation en gaz amont (32).

25. Dispositif de production d'électricité selon l'une quelconque des revendications 19 à 24, **caractérisé par** un piège à eau liquide (50) qui piège l'humidité à l'état liquide se trouvant dans le gaz réactionnel qui est sorti du second distributeur de sortie (36) vers la première conduite externe (39A).
